# EUROPEAN PATENT APPLICATION

(11) **EP 4 572 372 A1**
(43) Date of publication of application: **18.06.2025**
(21) Application number: 23862392.0
(22) Date of filing: 05.09.2023
(51) Int. Cl.: H04W 24/02

(54) **COMMUNICATION METHOD, AND APPARATUS**

(30) Priority: 07.09.2022 CN 202211089963
(71) Applicant: Huawei Technologies Co., Ltd., Shenzhen, Guangdong 518129 (CN)
(72) Inventor: GENG, Tingting, Shenzhen, Guangdong 518129 (CN)
(74) Representative: Körber, Martin Hans
(86) International application number: PCT/CN2023/117067
(87) International publication number: WO 2024/051698

(57) **Abstract**

Embodiments of this application disclose a communication method and apparatus. The method includes: A first access network device receives a first report recorded by a terminal device when the terminal device accesses a target PSCell and a first condition is met, determines a second access network device based on the first report including information related to a process of accessing the target PSCell, and adjusts a mobility parameter based on the first report when the first access network device is the same as the second access network device, or sends the first report to the second access network device when the first access network device is different from the second access network device. In embodiments of this application, the first access network device may correspondingly process the first report based on the first report, so that robustness of mobility parameter adjustment on a network side based on the report can be improved.

## Description

This application claims priority to Chinese Patent Application No. 202211089963.4, filed with the China National Intellectual Property Administration on September 7, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Primary secondary cell (primary second cell, PSCell) addition means to add a PSCell to provide a communication service for a terminal device. PSCell change means that the terminal device changes a PSCell to be accessed. After the PSCell is successfully added or the PSCell is successfully changed, the terminal device may record a report including information related to a process in which the terminal device successfully accesses the PSCell. However, there is no proper solution to a manner of processing the report on a network side.

### SUMMARY

Embodiments of this application disclose a communication method and apparatus, to improve robustness of mobility parameter adjustment on a network side based on a report.

According to a first aspect, this application discloses a communication method. The communication method may be applied to a first access network device, may be applied to a module (for example, a chip) in the first access network device, or may be applied to a logical module or software that can implement all or some functions of the first access network device. The following uses an example in which the method is applied to the first access network device for description. The communication method may include: receiving a first report, where the first report is recorded by a terminal device when the terminal device accesses a target PSCell and a first condition is met, and the first report may include information related to a process of accessing the target PSCell; determining a second access network device based on the first report; and adjusting a mobility parameter based on the first report when the first access network device is the same as the second access network device; or sending the first report to the second access network device when the first access network device is different from the second access network device.

In this implementation, after receiving the first report, the first access network device may determine the second access network device based on the first report. When the first access network device is the same as the second access network device, it indicates that the first report is sent to the first access network device, and the mobility parameter of the first access network device may be adjusted based on the first report. When the first access network device is different from the second access network device, it indicates that the first report is not sent to the first access network device, and the first access network device may forward the first report to the second access network device. It can be learned that the first access network device may properly process the first report, so that robustness of mobility parameter adjustment on a network side based on the first report can be improved.

In a possible implementation, that the first access network device sends the first report to the second access network device may include: When the first access network device is a master access network device and the second access network device is a source secondary access network device, the first access network device sends the first report to the source secondary access network device. The communication method may further include: sending first identification information of the terminal device in a source PSCell to the source secondary access network device.

In this implementation, the master access network device may send the first identification information of the terminal device in the source PSCell and the first report to the source secondary access network device, so that the source secondary access network device can identify the terminal device, to adjust the mobility parameter of the first access network device based on the first report.

In a possible implementation, the communication method may further include: sending source secondary access network device mobility information and/or condition PSCell addition and change (condition PSCell addition and change, CPAC) configuration information to the source secondary access network device.

In this implementation, the master access network device may further send the source secondary access network device mobility information and/or the CPAC configuration information to the source secondary access network device, so that the source secondary access network device can determine the source secondary access network device mobility information and/or the CPAC configuration information when the first report is generated, to adjust the mobility parameter of the first access network device based on the first report.

In a possible implementation, the communication method may further include: receiving a first message from the source secondary access network device, where the first message may include the first identification information of the terminal device in the source PSCell and second identification information of the terminal device in the source PSCell, the second identification information of the terminal device in the source PSCell is in a container (container), and the first identification information of the terminal device in the source PSCell is outside the container.

In this implementation, the master access network device may receive the first identification information of the terminal device in the source PSCell from the source secondary access network device, so that when the first report is received and the first report is to be forwarded to the source secondary access network device, the first identification information of the terminal device in the source PSCell and the first report can be sent to the source secondary access network device. In this way, the source secondary access network device can identify the terminal device, to adjust the mobility parameter of the first access network device based on the first report.

In a possible implementation, the communication method may further include: receiving the first identification information of the terminal device in the source PSCell from a target secondary access network device.

In this implementation, when the master access network device does not have the first identification information of the terminal device in the source PSCell, the master access network device may receive the first identification information of the terminal device in the source PSCell from the target secondary access network device, so that when the first report is received and the first report is to be forwarded to the source secondary access network device, the first identification information of the terminal device in the source PSCell and the first report can be sent to the source secondary access network device. In this way, the source secondary access network device can identify the terminal device, to adjust the mobility parameter of the first access network device based on the first report.

In a possible implementation, the communication method may further include: sending a first request to the target secondary access network device, where the first request is used to request the first identification information of the terminal device in the source PSCell.

In this implementation, when the master access network device does not have the first identification information of the terminal device in the source PSCell, the master access network device may first send, to the target secondary access network device, the request used to request the first identification information of the terminal device in the source PSCell, so that the target secondary access network device can send the first identification information of the terminal device in the source PSCell to the master access network device based on the request, to avoid transmission of unnecessary information.

In a possible implementation, the communication method may further include: receiving the source secondary access network device mobility information and/or the CPAC configuration information from the source secondary access network device.

In this implementation, the master access network device may receive the source secondary access network device mobility information and/or the CPAC configuration information of the terminal device in the source PSCell from the source secondary access network device, so that when the first report is received and the first report is to be forwarded to the source secondary access network device, the source secondary access network device mobility information and/or the CPAC configuration information can be sent to the source secondary access network device. In this way, the source secondary access network device can determine the source secondary access network device mobility information and/or the CPAC configuration information when the first report is generated, to adjust the mobility parameter of the first access network device based on the first report.

In a possible implementation, that the first access network device sends the first report to the second access network device includes: When the first access network device is a target secondary access network device and the second access network device is a source secondary access network device, the first access network device sends the first report to the source secondary access network device. The communication method may further include: sending source secondary access network device mobility information and/or CPAC configuration information to the source secondary access network device.

In this implementation, the target secondary access network device may send the first report and the source secondary access network device mobility information and/or the CPAC configuration information to the source secondary access network device, so that the source secondary access network device can determine the source secondary access network device mobility information and/or the CPAC configuration information when the first report is generated, to adjust the mobility parameter of the first access network device based on the first report.

In a possible implementation, the communication method may further include: sending identification information of the terminal device in a source PSCell to the source secondary access network device.

In this implementation, the target secondary access network device may further send first identification information of the terminal device in the source PSCell to the source secondary access network device, so that the source secondary access network device can identify the terminal device, to adjust the mobility parameter of the first access network device based on the first report.

In a possible implementation, the communication method may further include: receiving the source secondary access network device mobility information and/or the CPAC configuration information from a master access network device.

In this implementation, when the target secondary access network device does not have the source secondary access network device mobility information and/or the CPAC configuration information, the target secondary access network device may receive the source secondary access network device mobility information and/or the CPAC configuration information from the master access network device, so that when the first report is received and the first report is to be forwarded to the source secondary access network device, the source secondary access network device mobility information and/or the CPAC configuration information can be sent to the source secondary access network device. In this way, the source secondary access network device can determine the source secondary access network device mobility information and/or the CPAC configuration information when the first report is generated, to adjust the mobility parameter of the first access network device based on the first report.

In a possible implementation, the communication method may further include: sending a second request to the master access network device, where the second request is used to request the source secondary access network device mobility information and/or the CPAC configuration information.

In this implementation, when the target secondary access network device does not have the source secondary access network device mobility information and/or the CPAC configuration information, the target secondary access network device may first send, to the master access network device, the request used to request the source secondary access network device mobility information and/or the CPAC configuration information, so that the master access network device can send the source secondary access network device mobility information and/or the CPAC configuration information to the target secondary access network device based on the request, to avoid transmission of unnecessary information.

In a possible implementation, the first report may include cell information of a primary cell (primary cell, PCell).

In this implementation, the first access network device may determine, based on the cell information of the PCell included in the first report, whether to forward the first report to the master access network device.

In a possible implementation, when a second condition is met, the first report may include the cell information of the PCell. The second condition may be any one of the following: The terminal device is in an evolved universal terrestrial radio access-new radio dual connectivity (evolved universal terrestrial radio access-new radio dual connectivity, E-UTRA-NR DC, EN-DC) mode; and first indication information is received from the master access network device, where the first indication information indicates to record the cell information of the PCell, or indicates that PSCell change is triggered by the master access network device.

In this implementation, when the terminal device is in the EN-DC mode, or receives, from the master access network device, the indication information indicating to record the cell information of the PCell, or indicating that the PSCell change is triggered by the master access network device, the first report includes the cell information of the PCell, so that an access network device that receives the first report can determine, based on the cell information of the PCell in the first report, whether to forward the first report to the master access network device.

In a possible implementation, the first report may include cell information of the target PSCell.

In this implementation, in a PSCell addition scenario, the first report includes the cell information of the target PSCell, so that the access network device can determine, based on the first report, a target PSCell to be accessed by the terminal device.

In a possible implementation, the first report may further include one or more of identification information of the terminal device in the target PSCell, a recording cause of the first report, and a measurement result. The recording cause of the first report corresponds to the first condition, and the measurement result may include a measurement result of the target PSCell.

In this implementation, in a PSCell addition scenario, the first report includes the recording cause of the first report, so that the access network device can determine, based on the recording cause of the first report, a cause of triggering recording of the first report. The first report includes the identification information of the terminal device in the target PSCell, so that the access network device identifies the terminal device, to adjust the mobility parameter of the first access network device based on the first report. The first report includes the measurement result, so that the access network device determines a proper target PSCell based on the measurement result, or adjusts configuration information of the terminal device based on the measurement result.

In a possible implementation, the first report may include cell information of the source PSCell and cell information of the target PSCell.

In this implementation, in a PSCell change scenario, the first report includes the cell information of the source PSCell and the cell information of the target PSCell, so that the access network device can determine, based on the first report, a PSCell from which the terminal device is handed over and a PSCell to which the terminal device is handed over.

In a possible implementation, the first report may further include one or more of the identification information of the terminal device in the source PSCell, identification information of the terminal device in the target PSCell, a recording cause of the first report, and a measurement result. The recording cause of the first report corresponds to the first condition, and the measurement result may include one or more of a measurement result of the source PSCell, a measurement result of a neighboring cell of the source PSCell, and a measurement result of the target PSCell.

In this implementation, in a PSCell change scenario, the first report includes the recording cause of the first report, so that the access network device can determine, based on the recording cause of the first report, a cause of triggering recording of the first report. The first report includes the identification information of the terminal device in the target PSCell, so that the access network device identifies the terminal device, to adjust the mobility parameter of the first access network device based on the first report; and/or is used by the target secondary access network device to determine the identification information of the terminal device in the source PSCell based on context information of the terminal device in the target secondary access network device, so that when forwarding the first report to the source secondary access network device, the target secondary access network device indicates the identification information that is of the terminal device in the source PSCell and that corresponds to the first report. In this way, the source secondary access network device identifies the terminal device, to adjust the mobility parameter of the first access network device based on the first report. The first report includes the measurement result, so that the access network device determines a proper target PSCell based on the measurement result, or adjusts configuration information of the terminal device based on the measurement result. The first report includes the identification information of the terminal device in the source PSCell, so that the access network device identifies the terminal device, and further identifies configuration information of the terminal device in the source PSCell, to adjust the mobility parameter of the first access network device based on the first report.

In a possible implementation, the first report may include second indication information, and the second indication information indicates that the PSCell change is triggered by the master access network device or the source secondary access network device.

In this implementation, when access to the target PSCell is triggered by the PSCell change, the first report includes the second indication information, so that the access network device can determine, based on the second indication information, that the PSCell change is triggered by the master access network device or the source secondary access network device.

In a possible implementation, the first report may include identification information of the terminal device in the PCell.

In this implementation, the identification information of the terminal device in the PCell in the first report is used to send the first report to the master access network device or the PCell in a scenario in which access to the target PSCell is triggered by PCell addition or change and communication with the source PSCell and an access network device corresponding to the target PSCell cannot be performed, so that the master access network device forwards the first report to the source secondary access network device or the target secondary access network device. In this way, the source secondary access network device or the target secondary access network device can adjust a mobility parameter of the source secondary access network device or the target secondary access network device based on the first report.

In a possible implementation, that the first access network device determines the second access network device based on the first report may include: The first access network device determines the second access network device based on one or more of the cell information of the PCell, the recording cause of the first report, and the second indication information.

In this implementation, the first access network device may accurately determine the second access network device based on one or more of the cell information of the PCell in the first report, the recording cause of the first report, and the second indication information, and may further accurately process the first report correspondingly.

In a possible implementation, the first condition may include one or more of the following: Running time of a first timer is greater than or equal to a first threshold; a ratio of the running time of the first timer to configured duration of the first timer is greater than or equal to a second threshold; a quantity of random access attempts between the terminal device and the target PSCell is greater than or equal to a third threshold; and interruption time of data transmission between the terminal device and a secondary access network device is greater than or equal to a fourth threshold, where the first timer is any timer for determining whether a connection failure exists between the terminal device and the secondary access network device.

In a possible implementation, the communication method may further include: sending first configuration information to the terminal device, where the first configuration information is used to configure one or more of the first threshold, the second threshold, the third threshold, and the fourth threshold.

In this implementation, the first access network device may configure a threshold for the terminal device, so that the terminal device can record the first report under a condition corresponding to the threshold when accessing the target PSCell.

In a possible implementation, the communication method may further include: receiving third indication information from the terminal device, where the third indication information indicates that the terminal device has a capability of recording the first report.

In this implementation, the first access network device sends the first configuration information to the terminal device only when receiving, from the terminal device, the indication information indicating that the terminal device has the capability of recording the first report, to avoid a case in which the first configuration information is sent to the terminal device when the terminal device does not have the capability of recording the first report. In this way, unnecessary operations can be reduced and transmission resources can be saved.

In a possible implementation, that the first access network device receives the first report may include: The first access network device receives the first report from the terminal device, the master access network device, the source secondary access network device, the target secondary access network device, or a core network device.

According to a second aspect, this application discloses a communication method. The communication method may be applied to a terminal device, may be applied to a module (for example, a chip) in the terminal device, or may be applied to a logical module or software that can implement all or some functions of the terminal device. The following uses an example in which the method is applied to the terminal device for description. The communication method may include: recording a first report when the terminal device accesses a target PSCell and a first condition is met, where the first report may include information related to a process of accessing the target PSCell.

In this implementation, when the terminal device accesses the target PSCell and the first condition is met, the terminal device may record the first report including the information related to the process of accessing the target PSCell, so that subsequent invocation can be performed.

In a possible implementation, the first report may include cell information of a PCell.

In this implementation, the first report includes the cell information of the PCell, so that an access network device can determine, based on the cell information of the PCell included in the first report, whether to forward the first report to a master access network device.

In a possible implementation, when a second condition is met, the first report may include the cell information of the PCell, and the second condition may be any one of the following: The terminal device is in an EN-DC mode; and first indication information is received from a master access network device, where the first indication information indicates to record the cell information of the PCell, or indicates that PSCell change is triggered by the master access network device.

In this implementation, when the second condition is met, the first report includes the cell information of the PCell, so that an access network device that receives the first report can determine, based on the cell information of the PCell in the first report, whether to forward the first report to the master access network device.

In a possible implementation, the first report may include cell information of the target PSCell.

In this implementation, in a PSCell addition scenario, the first report includes the cell information of the target PSCell, so that a target PSCell to be accessed by the terminal device can be determined based on the first report.

In a possible implementation, the first report may further include one or more of identification information of the terminal device in the target PSCell, a recording cause of the first report, and a measurement result. The recording cause of the first report corresponds to the first condition, and the measurement result may include a measurement result of the target PSCell.

In this implementation, in a PSCell addition scenario, the first report includes the recording cause of the first report, so that a cause of triggering recording of the first report can be determined based on the recording cause of the first report. The first report includes the identification information of the terminal device in the target PSCell, so that an access network device identifies the terminal device, to adjust a mobility parameter of the access network device based on the first report. The first report includes the measurement result, so that the access network device determines a proper target PSCell based on the measurement result, or adjusts configuration information of the terminal device based on the measurement result.

In a possible implementation, the first report may include cell information of a source PSCell and cell information of the target PSCell.

In this implementation, in a PSCell change scenario, the first report includes the cell information of the source PSCell and the cell information of the target PSCell, so that a PSCell from which the terminal device is handed over and a PSCell to which the terminal device is handed over can be determined based on the first report.

In a possible implementation, the first report may further include one or more of identification information of the terminal device in the source PSCell, identification information of the terminal device in the target PSCell, a recording cause of the first report, and a measurement result. The recording cause of the first report corresponds to the first condition, and the measurement result may include one or more of a measurement result of the source PSCell, a measurement result of a neighboring cell of the source PSCell, and a measurement result of the target PSCell.

In this implementation, in a PSCell change scenario, the first report includes the recording cause of the first report, so that a cause of triggering recording of the first report can be determined based on the recording cause of the first report. The first report includes the identification information of the terminal device in the target PSCell, so that the access network device identifies the terminal device, to adjust a mobility parameter of a first access network device based on the first report; and/or is used by a target secondary access network device to determine the identification information of the terminal device in the source PSCell based on context information of the terminal device in the target secondary access network device, so that when forwarding the first report to a source secondary access network device, the target secondary access network device indicates the identification information that is of the terminal device in the source PSCell and that corresponds to the first report. In this way, the source secondary access network device identifies the terminal device, to adjust the mobility parameter of the first access network device based on the first report. The first report includes the measurement result, so that the access network device determines a proper target PSCell based on the measurement result, or adjusts configuration information of the terminal device based on the measurement result. The first report includes the identification information of the terminal device in the source PSCell, so that the access network device identifies the terminal device, and further identifies configuration information of the terminal device in the source PSCell, to adjust the mobility parameter of the first access network device based on the first report.

In a possible implementation, the first report may include second indication information, and the second indication information indicates that the PSCell change is triggered by the master access network device or a source secondary access network device.

In this implementation, when access to the target PSCell is triggered by the PSCell change, the first report includes the second indication information, so that it can be determined, based on the second indication information, that the PSCell change is triggered by the master access network device or the source secondary access network device.

In a possible implementation, the first report may include identification information of the terminal device in the PCell.

In this implementation, the identification information of the terminal device in the PCell in the first report is used to send the first report to the master access network device or the PCell in a scenario in which access to the target PSCell is triggered by PCell addition or change and communication with the source PSCell and an access network device corresponding to the target PSCell cannot be performed, so that the master access network device forwards the first report to the source secondary access network device or a target secondary access network device. In this way, the source secondary access network device or the target secondary access network device can adjust a mobility parameter of the source secondary access network device or the target secondary access network device based on the first report.

In a possible implementation, the first condition may include one or more of the following: Running time of a first timer is greater than or equal to a first threshold; a ratio of the running time of the first timer to configured duration of the first timer is greater than or equal to a second threshold; a quantity of random access attempts between the terminal device and the target PSCell is greater than or equal to a third threshold; and interruption time of data transmission between the terminal device and a secondary access network device is greater than or equal to a fourth threshold, where the first timer is any timer for determining whether a connection failure exists between the terminal device and the secondary access network device.

In a possible implementation, the communication method may further include: receiving first configuration information from one or more of the master access network device, the source secondary access network device, and a target secondary access network device, where the first configuration information is used to configure one or more of the first threshold, the second threshold, the third threshold, and the fourth threshold; and determining, based on the first configuration information, that the first condition is met.

In this implementation, the terminal device receives a threshold configured by the access network device, and may record the first report under a condition corresponding to the threshold when accessing the target PSCell.

In a possible implementation, the communication method may further include:
sending third indication information to one or more of the master access network device, the source secondary access network device, and the target secondary access network device, where the third indication information indicates that the terminal device has a capability of recording the first report.

In this implementation, when the terminal device has the capability of recording the first report, the terminal device may report the capability to the access network device, so that the access network device sends the first configuration information to the terminal device only when receiving, from the terminal device, the indication information indicating that the terminal device has the capability of recording the first report, to avoid a case in which the first configuration information is sent to the terminal device when the terminal device does not have the capability of recording the first report. In this way, unnecessary operations can be reduced and transmission resources can be saved.

In a possible implementation, the communication method may further include:
sending the first report to one or more of the master access network device, the source secondary access network device, and the target secondary access network device.

According to a third aspect, this application discloses a communication method. The communication method may be applied to a terminal device, may be applied to a module (for example, a chip) in the terminal device, or may be applied to a logical module or software that can implement all or some functions of the terminal device. The following uses an example in which the method is applied to the terminal device for description. The communication method may include: accessing a target PSCell; and determining, based on a second condition, whether to record cell information of a PCell. The second condition may be any one of the following: The terminal device is in an EN-DC mode; and first indication information is received from a master access network device, where the first indication information indicates to record the cell information of the PCell, or indicates that PSCell change is triggered by the master access network device.

In this implementation, after accessing the target PSCell, the terminal device may determine, based on the second condition, whether to record the cell information of the PCell.

In a possible implementation, the communication method may further include: recording the information about the PCell when the second condition is met.

In this implementation, after accessing the target PSCell, when the second condition is met, the terminal device records the cell information of the PCell, so that subsequent invocation can be performed.

In a possible implementation, the cell information of the PCell is recorded in a first report, and the first report includes information related to a process of accessing the target PSCell.

In this implementation, the cell information of the PCell is recorded in the first report, so that an access network device can determine, based on the cell information of the PCell included in the first report, whether to forward the first report to the master access network device.

According to a fourth aspect, this application discloses a communication apparatus. The communication apparatus may be used in a first access network device, may be used in a module (for example, a chip) in the first access network device, or may be used in a logical module or software that can implement all or some functions of the first access network device. The communication apparatus may include: a transceiver unit, configured to receive a first report, where the first report is recorded by a terminal device when the terminal device accesses a target PSCell and a first condition is met, and the first report may include information related to a process of accessing the target PSCell; and a processing unit, configured to determine a second access network device based on the first report. The processing unit is further configured to adjust a mobility parameter based on the first report when the first access network device is the same as the second access network device; or the transceiver unit is further configured to send the first report to the second access network device when the first access network device is different from the second access network device.

In a possible implementation, that the transceiver unit sends the first report to the second access network device may include:
When the first access network device is a master access network device and the second access network device is a source secondary access network device, the transceiver unit sends the first report to the source secondary access network device, where the transceiver unit is further configured to send first identification information of the terminal device in a source PSCell to the source secondary access network device.

In a possible implementation, the transceiver unit is further configured to send source secondary access network device mobility information and/or CPAC configuration information to the source secondary access network device.

In a possible implementation, the transceiver unit is further configured to receive a first message from the source secondary access network device. The first message may include the first identification information of the terminal device in the source PSCell and second identification information of the terminal device in the source PSCell, the second identification information of the terminal device in the source PSCell is in a container, and the first identification information of the terminal device in the source PSCell is outside the container.

In a possible implementation, the transceiver unit is further configured to receive the first identification information of the terminal device in the source PSCell from a target secondary access network device.

In a possible implementation, the transceiver unit is further configured to send a first request to the target secondary access network device, where the first request is used to request the first identification information of the terminal device in the source PSCell.

In a possible implementation, the transceiver unit is further configured to receive the source secondary access network device mobility information and/or the CPAC configuration information from the source secondary access network device.

In a possible implementation, that the transceiver unit sends the first report to the second access network device includes: When the first access network device is a target secondary access network device and the second access network device is a source secondary access network device, the transceiver unit sends the first report to the source secondary access network device. The transceiver unit is further configured to send source secondary access network device mobility information and/or CPAC configuration information to the source secondary access network device.

In a possible implementation, the transceiver unit is further configured to send identification information of the terminal device in a source PSCell to the source secondary access network device.

In a possible implementation, the transceiver unit is further configured to receive the source secondary access network device mobility information and/or the CPAC configuration information from a master access network device.

In a possible implementation, the transceiver unit is further configured to send a second request to the master access network device, where the second request is used to request the source secondary access network device mobility information and/or the CPAC configuration information.

In a possible implementation, the first report may include cell information of a PCell.

In a possible implementation, when a second condition is met, the first report may include the cell information of the PCell, and the second condition may be any one of the following: The terminal device is in an EN-DC mode; and first indication information is received from the master access network device, where the first indication information indicates to record the cell information of the PCell, or indicates that PSCell change is triggered by the master access network device.

In a possible implementation, the first report may include cell information of the target PSCell.

In a possible implementation, the first report may further include one or more of identification information of the terminal device in the target PSCell, a recording cause of the first report, and a measurement result. The recording cause of the first report corresponds to the first condition, and the measurement result may include a measurement result of the target PSCell.

In a possible implementation, the first report may include cell information of the source PSCell and cell information of the target PSCell.

In a possible implementation, the first report may further include one or more of the identification information of the terminal device in the source PSCell, identification information of the terminal device in the target PSCell, a recording cause of the first report, and a measurement result. The recording cause of the first report corresponds to the first condition, and the measurement result may include one or more of a measurement result of the source PSCell, a measurement result of a neighboring cell of the source PSCell, and a measurement result of the target PSCell.

In a possible implementation, the first report may include second indication information, and the second indication information indicates that the PSCell change is triggered by the master access network device or the source secondary access network device.

In a possible implementation, the first report may include identification information of the terminal device in the PCell.

In a possible implementation, that the first access network device determines the second access network device based on the first report may include:
The first access network device determines the second access network device based on one or more of the cell information of the PCell, the recording cause of the first report, and the second indication information.

In a possible implementation, the first condition may include one or more of the following: Running time of a first timer is greater than or equal to a first threshold; a ratio of the running time of the first timer to configured duration of the first timer is greater than or equal to a second threshold; a quantity of random access attempts between the terminal device and the target PSCell is greater than or equal to a third threshold; and interruption time of data transmission between the terminal device and a secondary access network device is greater than or equal to a fourth threshold, where the first timer is any timer for determining whether a connection failure exists between the terminal device and the secondary access network device.

In a possible implementation, the transceiver unit is further configured to send first configuration information to the terminal device, where the first configuration information is used to configure one or more of the first threshold, the second threshold, the third threshold, and the fourth threshold.

In a possible implementation, the transceiver unit is further configured to receive third indication information from the terminal device, where the third indication information indicates that the terminal device has a capability of recording the first report.

In a possible implementation, that the transceiver unit receives the first report may include: The transceiver unit receives the first report from the terminal device, the master access network device, the source secondary access network device, the target secondary access network device, or a core network device.

According to a fifth aspect, this application discloses a communication apparatus. The communication apparatus may be used in a terminal device, may be used in a module (for example, a chip) in the terminal device, or may be used in a logical module or software that can implement all or some functions of the terminal device. The communication apparatus may include a processing unit, configured to: record a first report when the terminal device accesses a target PSCell and a first condition is met, where the first report may include information related to a process of accessing the target PSCell.

In a possible implementation, the first report may include cell information of a PCell.

In a possible implementation, when a second condition is met, the first report may include the cell information of the PCell, and the second condition may be any one of the following: The terminal device is in an EN-DC mode; and first indication information is received from a master access network device, where the first indication information indicates to record the cell information of the PCell, or indicates that PSCell change is triggered by the master access network device.

In a possible implementation, the first report may include cell information of the target PSCell.

In a possible implementation, the first report may further include one or more of identification information of the terminal device in the target PSCell, a recording cause of the first report, and a measurement result. The recording cause of the first report corresponds to the first condition, and the measurement result may include a measurement result of the target PSCell.

In a possible implementation, the first report may include cell information of a source PSCell and cell information of the target PSCell.

In a possible implementation, the first report may further include one or more of identification information of the terminal device in the source PSCell, identification information of the terminal device in the target PSCell, a recording cause of the first report, and a measurement result. The recording cause of the first report corresponds to the first condition, and the measurement result may include one or more of a measurement result of the source PSCell, a measurement result of a neighboring cell of the source PSCell, and a measurement result of the target PSCell.

In a possible implementation, the first report may include second indication information, and the second indication information indicates that the PSCell change is triggered by the master access network device or a source secondary access network device.

In a possible implementation, the first report may include identification information of the terminal device in the PCell.

In a possible implementation, the first condition may include one or more of the following: Running time of a first timer is greater than or equal to a first threshold; a ratio of the running time of the first timer to configured duration of the first timer is greater than or equal to a second threshold; a quantity of random access attempts between the terminal device and the target PSCell is greater than or equal to a third threshold; and interruption time of data transmission between the terminal device and a secondary access network device is greater than or equal to a fourth threshold, where the first timer is any timer for determining whether a connection failure exists between the terminal device and the secondary access network device.

In a possible implementation, the communication apparatus may further include: a transceiver unit, configured to: receive first configuration information from one or more of the master access network device, the source secondary access network device, and a target secondary access network device, where the first configuration information is used to configure one or more of the first threshold, the second threshold, the third threshold, and the fourth threshold. The processing unit is further configured to: determine, based on the first configuration information, that the first condition is met.

In a possible implementation, the transceiver unit is further configured to send third indication information to one or more of the master access network device, the source secondary access network device, and the target secondary access network device, where the third indication information indicates that the terminal device has a capability of recording the first report.

In a possible implementation, the transceiver unit is further configured to send the first report to one or more of the master access network device, the source secondary access network device, and the target secondary access network device.

According to a sixth aspect, this application discloses a communication apparatus. The communication apparatus may be used in a terminal device, may be used in a module (for example, a chip) in the terminal device, or may be used in a logical module or software that can implement all or some functions of the terminal device. The communication apparatus may include:
a transceiver unit, configured to access a target PSCell; and
a processing unit, configured to determine, based on a second condition, whether to record cell information of a PCell, where the second condition may be any one of the following: the terminal device is in an EN-DC mode; and first indication information is received from a master access network device, where the first indication information indicates to record the cell information of the PCell, or indicates that PSCell change is triggered by the master access network device.

In a possible implementation, the processing unit is further configured to record the information about the PCell when the second condition is met.

In a possible implementation, the cell information of the PCell is recorded in a first report, and the first report includes information related to a process of accessing the target PSCell.

According to a seventh aspect, this application discloses a communication apparatus. The communication apparatus may include a processor, a memory, and a transceiver. The transceiver is configured to: receive information from a communication apparatus other than the communication apparatus, and output information to a communication apparatus other than the communication apparatus. When the processor executes a computer program stored in the memory, the processor is enabled to perform the communication method disclosed in any one of the first aspect or the implementations of the first aspect.

According to an eighth aspect, this application discloses a communication apparatus. The communication apparatus may include a processor, a memory, and a transceiver. The transceiver is configured to: receive information from a communication apparatus other than the communication apparatus, and output information to a communication apparatus other than the communication apparatus. When the processor executes a computer program stored in the memory, the processor is enabled to perform the communication method disclosed in any one of the second aspect or the implementations of the second aspect, or the processor is enabled to perform the communication method disclosed in any one of the third aspect or the implementations of the third aspect.

According to a ninth aspect, this application discloses a communication system. The communication system includes a first access network device, and the first access network device is configured to perform the method in any one of the first aspect or the implementations of the first aspect.

In a possible implementation, the communication system further includes a second access network device, and the second access network device is configured to receive a first report forwarded by the first access network device.

In a possible implementation, the communication system further includes a terminal device. The terminal device is configured to: perform the method disclosed in any one of the second aspect or the implementations of the second aspect, or perform the method disclosed in any one of the third aspect or the implementations of the third aspect.

According to a tenth aspect, this application discloses a computer-readable storage medium, and the computer-readable storage medium stores a computer program or computer instructions. When the computer program or the computer instructions are run by a processor, the communication method disclosed in the foregoing aspects is implemented.

According to an eleventh aspect, this application discloses a chip, including a processor, configured to execute a program stored in a memory. When the program is executed by the processor, the chip performs the foregoing method.

In a possible implementation, the memory is located outside the chip.

According to a twelfth aspect, this application discloses a computer program product, and the computer program product includes computer program code. When the computer program code is run by a processor, the foregoing communication method is performed.

### BRIEF DESCRIPTION OF DRAWINGS

FIG. 1 is a diagram of a network architecture according to an embodiment of this application;
FIG. 2 is a diagram of an NR protocol stack according to an embodiment of this application;
FIG. 3 is a diagram of MR-DC according to an embodiment of this application;
FIG. 4 is a diagram of various cells in DC according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a diagram of a structure of a communication apparatus according to an embodiment of this application;
FIG. 11 is a diagram of a structure of another communication apparatus according to an embodiment of this application; and
FIG. 12 is a diagram of a structure of still another communication apparatus according to an embodiment of this application.

### DESCRIPTION OF EMBODIMENTS

Embodiments of this application disclose a communication method and apparatus, to improve robustness of mobility parameter adjustment on a network side based on a report. Details are separately described below.

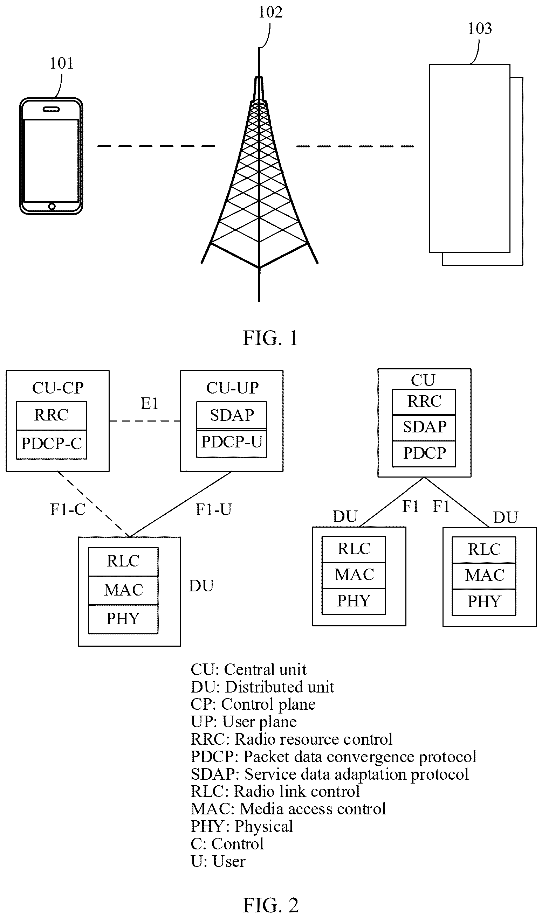

To better understand embodiments of this application, the following first describes a network architecture used in embodiments of this application. FIG. 1 is a diagram of a network architecture according to an embodiment of this application. As shown in FIG. 1, the network architecture may include a terminal device 101, an access network device 102, and a core network device 103. Communication between the terminal device and the access network device may include uplink communication (that is, communication from the terminal device to the access network device) and downlink communication (that is, communication from the access network device to the terminal device). In uplink communication, the terminal device is configured to send an uplink signal to the access network device; and the access network device is configured to receive the uplink signal from the terminal device. The uplink signal may be uplink control information, and may be transmitted through a physical uplink control channel (physical uplink control channel, PUCCH). The uplink signal may alternatively be uplink data, and may be transmitted through a physical uplink shared channel (physical uplink share channel, PUSCH). In downlink communication, the access network device is configured to send a downlink signal to the terminal device; and the terminal device is configured to receive the downlink signal from the access network device. The downlink signal may be downlink control information, and may be transmitted through a physical downlink control channel (physical downlink control channel, PDCCH). The downlink signal may alternatively be downlink data, and may be transmitted through a physical downlink shared channel (physical downlink share channel, PDSCH).

The terminal device may also be referred to as user equipment (user equipment, UE), a subscriber station (subscriber station, STA), a mobile station (mobile station, MS), a mobile terminal (mobile terminal, MT), or the like, and is a device that provides voice and/or data connectivity for a user. The terminal device may be a handheld terminal, a very small aperture terminal (very small aperture terminal, VSAT), a notebook computer, a customer premise equipment (customer premise equipment, CPE) notebook computer, a subscriber unit (subscriber unit), a cellular phone (cellular phone), a smartphone (smartphone), a wireless data card, a personal digital assistant (personal digital assistant, PDA) computer, a tablet computer, a handheld (handheld) device, a laptop computer (laptop computer), a cordless phone (cordless phone) or a wireless local loop (wireless local loop, WLL) station, a machine type communication (machine type communication, MTC) terminal, a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a flying device (for example, an intelligent robot, a hot air balloon, an unmanned aerial vehicle, or an airplane), or another device that can access a network. A specific technology and a specific device form used by the terminal device are not limited in this application. The terminal device may have one or more subscriber identity module (subscriber identity module, SIM) cards.

The access network device is a device that provides radio access for the terminal device, for example, a base station, and is mainly responsible for functions such as radio resource management, quality of service (quality of service, QoS) flow management, and data compression and encryption on an air interface side. The access network device may be a next generation NodeB (next generation NodeB, gNB) in a new radio (new radio, NR) system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a Wi-Fi access point (access point, AP), or the like. In addition, in a network structure, the access network device may include a central unit (central unit, CU), a distributed unit (distributed unit, DU), or include a CU and a DU. An access network device including the CU and the DU may split protocol layers of a base station, for example, a gNB. Functions of some protocol layers are centrally controlled by the CU. Functions of some or all of remaining protocol layers are distributed in the DU, and the CU centrally controls the DU.

FIG. 2 is a diagram of an NR protocol stack according to an embodiment of this application. As shown in FIG. 2, a radio resource control (radio resource control, RRC) layer, a packet data convergence protocol (packet data convergence protocol, PDCP) layer, and a service data adaptation protocol (service data adaptation protocol, SDAP) layer in a protocol stack are deployed on a CU. A radio link control (radio link control, RLC) layer, a media access control (media access control, MAC) layer, and a physical layer (physical layer, PHY) in the protocol stack are deployed on a DU. Therefore, the CU has processing capabilities of the RRC layer, the PDCP layer, and the SDAP layer. The DU has processing capabilities of the RLC layer, the MAC layer, and the PHY layer.

It should be understood that the foregoing function division is merely an example, and does not constitute a limitation on the CU and the DU. In other words, there may be another function division manner between the CU and the DU. This is not limited herein.

Functions of the CU may be implemented by one entity, or may be implemented by different entities. For example, the functions of the CU may be further divided. For example, a control plane (control plane, CP) and a user plane (user plane, UP) are separated, that is, a control plane of the CU (CU-CP) and a user plane of the CU (CU-UP). For example, the CU-CP and the CU-UP may be implemented by different functional entities. The CU-CP and the CU-UP may be coupled to the DU to jointly implement a function of an access network device. The CU-CP may also be divided into a CU-CP 1 and a CU-CP 2. The CU-CP 1 includes various radio resource management functions, and the CU-CP 2 includes only an RRC function and a PDCP-C function (that is, a basic function of control plane signaling at the PDCP layer). In a possible manner, the CU-CP is responsible for a control plane function, and is mainly responsible for the RRC function and the PDCP-C function. The PDCP-C is mainly responsible for encryption and decryption, integrity protection, data transmission, and the like of control plane data. The CU-UP is responsible for a user plane function, and is mainly responsible for an SDAP function and a PDCP-U function. The SDAP is mainly responsible for processing data of a core network and mapping a data flow (flow) to a bearer. The PDCP-U is mainly responsible for encryption and decryption, integrity protection, header compression, sequence number maintenance, data transmission, and the like of a data plane. The CU-CP and the CU-UP may be connected through an E1 interface. The CU-CP may be connected to a core network through a next generation (next generation, NG) interface. The DU and the CU-CP may be connected through an F1-C interface. The DU and the CU-UP may be connected through an F1-U interface. In another possible implementation, the PDCP-C is also in the CU-UP.

A core network device may correspond to different devices in different systems. For example, the core network device may be a core network of a 4^{th} generation (4^{th} generation, 4G) communication system, that is, a mobility management entity (mobility management entity, MME) and/or a serving gateway (serving gateway, S-GW) in an evolved packet core (evolved packet core, EPC) network, or may be one or more of an access and mobility management function (access and mobility management function, AMF) network element, a session management function (session management function, SMF) network element, a user plane function (user plane function, UPF) network element, or the like in a 5G core (5G core, 5GC) network.

It should be noted that the network architecture shown in FIG. 1 is not limited to including only the terminal device, the access network device, and the core network device shown in the figure, and may further include another terminal device, access network device, and core network device that are not shown in the figure. Details are not listed one by one in this application.

The foregoing network architecture may be used in a long term evolution (long term evolution, LTE) system, may be used in a 5G or NR system, may be used in a non-terrestrial network (non-terrestrial network, NTN) system, or may be used in a narrow band-internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, and a communication system evolved after 5G, for example, a 6^{th} generation (6^{th} generation, 6G) system.

To understand the technical solutions provided in this application, the following first describes related technologies in embodiments of this application.

### Multi-radio dual connectivity (multi-radio dual connectivity, MR-DC)

In a wireless network, one terminal device may communicate with a plurality of access network devices, that is, dual connectivity (dual connectivity, DC), which may also be referred to as MR-DC, is formed. The plurality of access network devices may be access network devices that belong to a same radio access technology (radio access technology, RAT), for example, may all be LTE access network devices such as eNBs, or may all be NR access network devices such as gNBs. The plurality of access network devices may alternatively be access network devices that belong to different RATs. For example, one access network device is an eNB, and another access network device is a gNB.

A network side may provide a communication service for the terminal device by using resources of the plurality of access network devices, to provide high-rate transmission for the terminal device. In the DC, an access network device that exchanges control plane signaling with a core network device may be referred to as a master node (master node, MN) or a master access network device, and another access network device may be referred to as a secondary node (secondary node, SN) or a secondary access network device. When the access network device is a base station, the MN may also be referred to as a master base station, and the SN may also be referred to as a secondary base station.

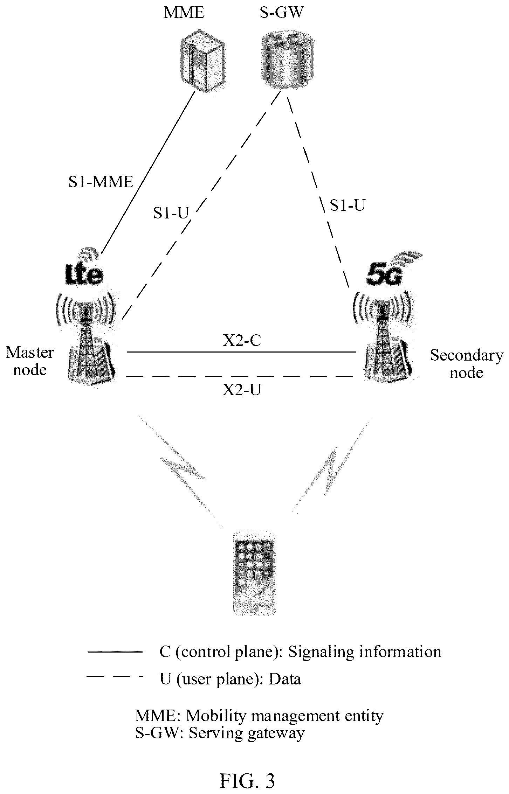

FIG. 3 is a diagram of MR-DC according to an embodiment of this application. As shown in FIG. 3, an MN is a 4G access network device, an SN is a 5G access network device, and a core network is a 4G core network.

In the DC, a core network connected to an access network device may be an EPC, or may be a 5GC. Therefore, the MR-DC may include the following types: NR-NR DC, NE-DC, NG EN-DC, and EN-DC. N represents 5G. For example, N may be NR. E represents E-UTRA, a RAT of the MN is before "-", and a RAT of the SN is after "-". In the NR-NR DC, the NE-DC, and the NG EN-DC, core networks connected to the MN and the SN are both 5GCs. In the EN-DC, the MN is an LTE access network device, a connected core network is an EPC, and the SN is an NR access network device. An NR SN in the EN-DC is a non-standalone access network device, and has no signaling plane connection to a core network device.

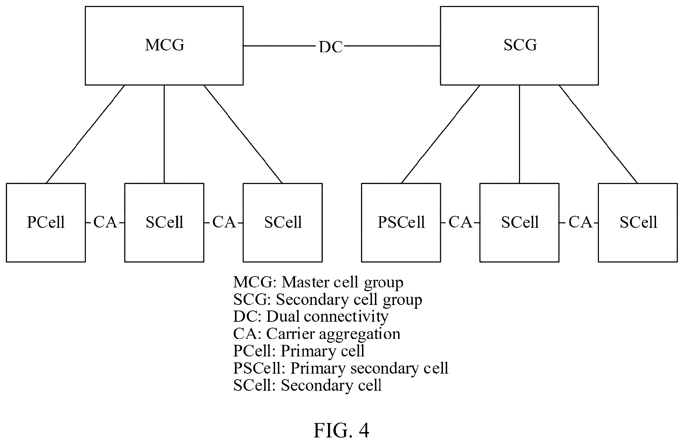

FIG. 4 is a diagram of various cells in DC according to an embodiment of this application. As shown in FIG. 4, a terminal device may simultaneously receive services of a plurality of cells of one access network device. A serving cell group provided by an MN for the terminal device may be referred to as a master cell group (master cell group, MCG), and a serving cell group provided by an SN for the terminal device may be referred to as a secondary cell group (secondary cell group, SCG). The MCG and the SCG each include one or more cells (Cells). When the MCG includes only one cell, the cell is a primary cell (primary cell, PCell) of the terminal device. When the MCG includes a plurality of cells, one of the plurality of cells is a PCell, and a remaining cell is a secondary cell (secondary cell, SCell). When the SCG includes only one cell, the cell is a primary secondary cell (primary second cell, PSCell) of the terminal device. When the SCG includes a plurality of cells, one of the plurality of cells is a PSCell, and a remaining cell is an SCell. To normalize various nouns in NR, the PCell and the PSCell are collectively referred to as special cells (special cells, SpCells). Cells in various cell groups may jointly provide transmission resources for the terminal device through carrier aggregation (carrier aggregation, CA). In other words, the terminal device may simultaneously use a plurality of cells (carriers) to perform uplink and downlink communication, so that a data transmission rate can be increased. The following separately describes the PCell, the PSCell, and the SCell.

The PCell is a cell that works on a primary carrier. The terminal device performs an initial connection establishment process or initiates a connection re-establishment process in the cell, or the cell is indicated as the primary cell in a handover process.

The PSCell is a cell in which the terminal device initiates a random access process in a secondary node, a cell in which the terminal device skips a random access process in a secondary node change process to initiate data transmission, or a cell of a secondary node to which the terminal device initiates random access in a synchronous reconfiguration process.

The SCell is a cell that works on a secondary carrier. Once an RRC connection is established, the secondary cell may be configured to provide an additional radio resource.

It may be understood that this application is described by using the DC as an example, and may also be extended to a multi-connectivity scenario. In the multi-connectivity scenario, there may be one MCG and at least two SCGs, or there may be a plurality of MCGs and a plurality of SCGs. This is not limited in this application.

### PSCell addition and change, and condition PSCell addition and change (condition PSCell addition and change, CPAC)

In MR-DC, a network side triggers the PSCell addition, and the PSCell addition can be triggered only by the MN, and may be referred to as MN-triggered PSCell addition. Due to mobility of the terminal device, the network side triggers the PSCell change. To be specific, the network side indicates the terminal device to change from one PSCell to another PSCell. The PSCell change may be triggered by the MN, or may be triggered by a source SN (source SN, S-SN).

In an example, when the network side may determine, based on a measurement result of the terminal device, that signal quality of a source PSCell deteriorates and signal quality of another PSCell becomes better, the network side may notify the terminal device to perform PSCell change. The PSCell change may be changing from a cell of one SN to a cell of another SN, or may be changing from one cell of an SN to another cell of the SN. There are two mechanisms for the network side to configure the terminal device to perform PSCell addition or change. One is common PSCell addition or change, and the other is condition PSCell addition (condition PSCell addition, CPA) or condition PSCell change (condition PSCell change, CPC), which may be collectively referred to as CPAC. The common PSCell addition or change may also be referred to as PSCell addition or change for short. In this mechanism, a target PSCell is generally specified by the network side. After receiving a configuration from the network side, the terminal device immediately performs a PSCell addition or change procedure with the target PSCell. The CPAC includes the CPA or the CPC. Generally, the network side sends CPA configuration information or CPC configuration information to the terminal device, and the CPA configuration information or the CPC configuration information may be collectively referred to as CPAC configuration information. The CPAC configuration information includes information about one or more candidate PSCells and a corresponding trigger condition. After the terminal device receives the CPAC configuration information, when one or more candidate PSCells meet the corresponding trigger condition, the terminal device may determine one of the candidate PSCells as the target PSCell, and perform an access procedure with the target PSCell. The procedure may be referred to as a CPA or CPC procedure of the candidate PSCell.

In this application, "(condition) PSCell addition or change" indicates the common PSCell addition or change and/or the condition PSCell addition or change. The "target PSCell" indicates a target PSCell in a (condition) PSCell addition or change procedure.

### SN-triggered (condition) PSCell change

In an example of an SN-triggered (condition) PSCell change procedure, the S-SN sends, to the MN, S-SN mobility information (mobility information), indicating a mobility parameter corresponding to the (condition) PSCell change. In addition, the S-SN may send a C-RNTI of the terminal device in the source PSCell to a target SN (target SN, T-SN) or a candidate SN via the MN in a container (container) manner. The MN does not obtain information in the container. To be specific, the MN cannot obtain the C-RNTI of the terminal device in the source PSCell. Therefore, in an SN-triggered (condition) PSCell change scenario, the S-SN mobility information is stored in the MN, and the C-RNTI of the terminal device in the source PSCell is stored in the T-SN.

When the terminal device successfully accesses the target PSCell, the terminal device may record, in a first report, information related to a process of accessing the target PSCell. For example, the first report may be a successful secondary cell addition/change report (successful PSCell addition/change report, SPCR). However, a condition for triggering the SPCR, content included in the SPCR, and the like are not described in detail. In addition, processing performed by the network side on the SPCR is not described.

It may be understood that, this application uses a common PSCell addition or change scenario as an example for description, and may also be applicable to a condition PSCell addition or change scenario. Related terms and operations of the terminal device or the access network device need to be correspondingly extended. For example, the PSCell addition may be extended to the condition PSCell addition, and the PSCell change may be extended to the condition PSCell change. Other similar terms are not listed one by one. For another example, that the terminal device performs PSCell addition or change may be extended as follows: The terminal device receives the CPAC configuration information sent by the access network device, and the terminal device determines that the one or more candidate PSCells meet the trigger condition, determines one of the candidate PSCells as the target PSCell, and performs a condition PSCell addition or change procedure. Other similar operations are not listed one by one.

It may be understood that, in embodiments of this application, the terminal device and/or a radio access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

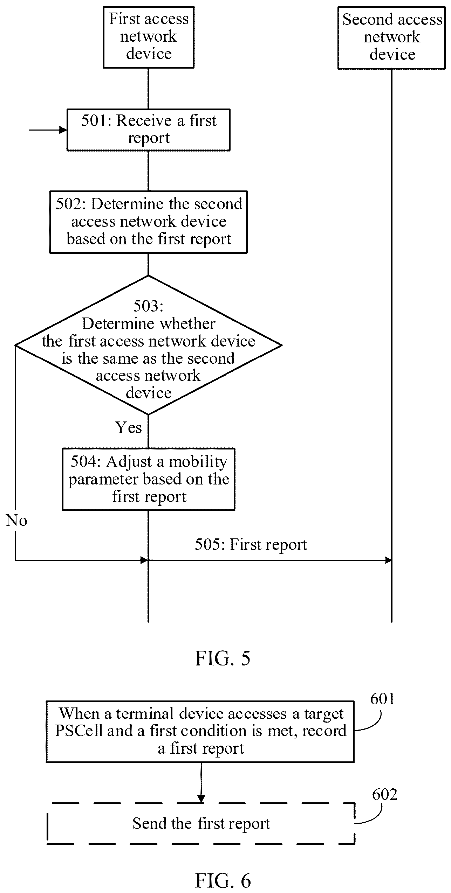

Based on the network architectures shown in FIG. 2 to FIG. 4, FIG. 5 is a schematic flowchart of a communication method according to an embodiment of this application. As shown in FIG. 5, the communication method may include the following steps.

501: A first access network device receives a first report.

For example, the first report may be sent by a terminal device to the first access network device. In this case, the first access network device may receive the first report from the terminal device. For example, the first report may alternatively be sent by another access network device to the first access network device. In this case, the first access network device may alternatively receive the first report from the another access network device.

The first report is recorded by the terminal device when the terminal device accesses a target PSCell and a first condition is met. In other words, the terminal device may record the first report when the terminal device accesses the target PSCell and the first condition is met. Further, the recorded first report may be sent to the first access network device.

In an implementation, the first report may be sent to the first access network device through a direct interface between the terminal device and the first access network device. In this implementation, the first access network device is a serving access network device currently accessed by the terminal device, and the first access network device may further determine whether to forward the first report and determine an access network device to which the first report is to be forwarded.

In an implementation, the first report may be forwarded to the first access network device by another access network device (for example, an access network device #1). Specifically, the terminal device may first send the first report to the access network device #1, and then the access network device #1 sends the first report to the first access network device. In this implementation, the access network device #1 is a serving access network device currently accessed by the terminal device. Specifically, the terminal device may first send the first report to an access network device #2, the access network device #2 sends the first report to the access network device #1, and then the access network device #1 sends the first report to the first access network device. In this implementation, the access network device #2 is a serving access network device currently accessed by the terminal device.

That the terminal device accesses the target PSCell may be understood as that the terminal device successfully accesses the target PSCell. "Successful access" may mean that the terminal device successfully completes a random access procedure with the target PSCell, or may mean that the terminal device successfully completes data transmission with the target PSCell. In a case, a PSCell addition mechanism may enable the terminal device to access the target PSCell. In this case, the target PSCell is indicated by an MN to the terminal device. In a PSCell addition scenario, there is no source PSCell, and there is only the target PSCell. Correspondingly, there is no S-SN, and there is only a T-SN. In another case, a PSCell change mechanism may enable the terminal device to access the target PSCell. In this case, the target PSCell is configured by an MN or an S-SN. In a PSCell change scenario, there is a source PSCell and the target PSCell. Correspondingly, there is the S-SN and a T-SN. For example, if the S-SN and the T-SN are different access network devices, PSCell change includes changing from a cell of one SN to a cell of another SN, and the source PSCell and the target PSCell are different cells. For example, if the S-SN and the T-SN are a same access network device, PSCell change includes changing from one cell of an SN to another cell of the SN, and the source PSCell and the target PSCell are different. The following first describes the first condition and related information.

The first condition may include one or more of the following: Running time of a first timer is greater than or equal to a first threshold; a ratio of the running time of the first timer to configured duration of the first timer is greater than or equal to a second threshold; a quantity of random access attempts between the terminal device and the target PSCell is greater than or equal to a third threshold; and interruption time of data transmission between the terminal device and the SN is greater than or equal to a fourth threshold.

The first timer is any timer for determining whether a connection failure exists between the terminal device and the SN. For example, the first timer may be a T304 timer, a T310 timer, or a T312 timer. A trigger condition for starting running of the T310 timer is that the terminal device detects that there is a physical layer problem (physical layer problem) between the terminal device and the S-SN. The T312 timer may be understood as a timer corresponding to a frequency of the target PSCell. A trigger condition for starting running of the T312 timer may be that the terminal device triggers a measurement report when a T310 timer corresponding to a PCell or the source PSCell runs. The T312 timer may be at a frequency level. A trigger condition for ending running of the T312 timer may be that running time of the T312 timer expires, in other words, the running time of the T312 timer is configured duration of the T312 timer, or may be that the terminal device receives a PSCell addition or change configuration message or the terminal device determines that a trigger condition in CPAC configuration information is met.

For example, the connection failure may be a radio link failure (radio link failure, RLF), or may be a handover failure (handover failure, HOF), a listen before talk failure (listen before talk failure, LBTF), or a beam failure recovery failure (beam failure recovery failure, BFRF). Configured duration of the first timer may be maximum duration of the running time of the first timer. The interruption time of the data transmission between the terminal device and the SN may be understood as a time interval between interruption of data transmission between the terminal device and the S-SN and a connection of data transmission between the terminal device and the T-SN.

When the first access network device is the MN, the S-SN, or the T-SN, the first access network device may send first configuration information to the terminal device. The first configuration information may include any one or more of the first threshold, the second threshold, the third threshold, and the fourth threshold. For example, when the first access network device is the S-SN or the T-SN, the first access network device may send the first configuration information to the terminal device via the MN. To be specific, the first access network device may first send the first configuration information to the MN, and then the MN may send the first configuration information to the terminal device. For example, when the first access network device is the S-SN, the first access network device may send the first configuration information to the terminal device by using an SRB 3. For example, when the first access network device is the T-SN, the first access network device may send the first configuration information to the terminal device via the S-SN. To be specific, the first access network device may first send the first configuration information to the S-SN, and then the S-SN may send the first configuration information to the terminal device. It should be understood that there may be one or more first timers.

When there is one first timer, the first access network device may configure a first threshold or a second threshold only for the first timer. When there are a plurality of first timers, the first access network device may respectively configure first thresholds or second thresholds for the plurality of first timers. The first thresholds or the second thresholds configured by the first access network device for different first timers may be the same or may be different. In other words, a same threshold or different thresholds may be configured for different first timers.

For example, the T-SN may configure, for the terminal device, a first threshold or a second threshold corresponding to the T304 timer. A trigger condition for starting running of the T304 timer may be that the terminal device receives a common PSCell addition or change configuration message, or may be that the terminal device determines that the trigger condition in the CPAC configuration information is met. A trigger condition for ending running of the T304 timer may be that the T304 timer expires, in other words, running time of the T304 timer is configured duration of the T304 timer, or may be that the terminal device successfully accesses the target PSCell, for example, the terminal device completes the random access procedure with the target PSCell.

For example, the MN that triggers PSCell addition or the S-SN that triggers PSCell addition/change may configure, for the terminal device, a first threshold or a second threshold corresponding to the T310 timer and/or a first threshold or a second threshold corresponding to the T312 timer. For example, whether a first condition corresponding to the T310 timer is met is used as an example. When running duration of the T310 timer is greater than or equal to the first threshold corresponding to the T310 timer, the terminal device may determine that the first condition is met. Alternatively, when a ratio of running duration of the T310 timer to configured duration of the T310 timer is greater than or equal to the second threshold corresponding to the T310 timer, the terminal device may determine that the first condition is met.

When the CPAC configuration information includes a plurality of candidate PSCells, the first threshold or the second threshold configured by the first access network device for the first timer may be shared by the plurality of candidate PSCells. In other words, the plurality of candidate PSCells may correspond to a same first threshold or a same second threshold. Alternatively, the first access network device may configure, for all of the plurality of candidate PSCells, the first thresholds or the second thresholds corresponding to the first timers. In other words, the plurality of candidate PSCells correspond to different first thresholds or different second thresholds.

After accessing the MN or the S-SN, the terminal device may send third indication information to the MN or the S-SN. The third indication information indicates that the terminal device has a capability of recording the first report. Correspondingly, the MN or the S-SN may receive the third indication information from the terminal device. Optionally, the MN or the S-SN may further send the third indication information to the T-SN. The MN/S-SN/T-SN may send the first configuration information to the terminal device based on the third indication information. It can be learned that when the terminal device has the capability of recording the first report, the first access network device sends the first configuration information to the terminal device. When the terminal device does not have the capability of recording the first report, the first access network device may not send the first configuration information to the terminal device, to avoid a case in which the first configuration information is sent to the terminal device when the terminal device does not have the capability of recording the first report, reduce unnecessary operations, and save transmission resources.

The following describes content of the first report.

The first report may include information related to a process of accessing the target PSCell. In a (condition) PSCell addition scenario, the first report may include cell information of the PCell and cell information of the target PSCell. The first report may further include one or more of identification information of the terminal device in the target PSCell, identification information of the terminal device in the PCell, a recording cause of the first report, and a measurement result. The recording cause (cause) indicates a cause of triggering recording of the first report. Optionally, the recording cause corresponds to the first condition. The measurement result may include a measurement result of the target PSCell. The recording cause corresponds to the first condition, and may be understood as a first condition for triggering recording of the first report, or may be understood as a threshold corresponding to the first condition for triggering recording of the first report. For example, if the first condition is that the ratio of the running time of the first timer to the configured duration of the first timer is greater than or equal to the second threshold, the first timers are the T304 timer and the T310 timer, and both meet the first condition. The recording cause indicates the cause of triggering recording of the first report and corresponds to the first condition. Therefore, recording causes may be a T304-cause and a T310-cause, and/or the second threshold corresponding to T304/T310. It may be understood that, in the condition PSCell addition scenario, the first report may further include CPA configuration information; or the CPA configuration information and information indicating whether a trigger condition included in the CPA configuration information is met. In a (condition) PSCell change scenario, the first report may include cell information of the source PSCell and cell information of the target PSCell.

For example, the cell information may include one or more of a cell global identifier (cell global identifier, CGI), a physical cell identifier (physical cell identifier, PCI), a frequency, a cell (cell) identifier (identifier, ID), a non-public network identifier (non-public network identifier, NPN ID), and a non-terrestrial network identifier (non-terrestrial network identifier, NTN ID) of the cell. The CGI may include a public land mobile network (public land mobile network, PLMN ID) and a cell ID. The cell information may further include a tracking area code (tracking area code, TAC) and/or identification information of an access network device to which the cell belongs, for example, a global network device identifier. Identification information of the terminal device in the target PSCell may be a cell radio network temporary identifier (cell radio network temporary identifier, C-RNTI) allocated by the target PSCell to the terminal device, or may be an interface identifier of the terminal device in the T-SN. The interface identifier of the terminal device in the T-SN may be an identifier of an X2 interface when the terminal device is in the T-SN, or may be an identifier of an Xn interface when the terminal device is in the T-SN. For example, the identifier of the X2 interface may be an X2 application protocol (application protocol, AP) ID. For example, the identifier of the Xn interface may be an XnAP ID.

In an implementation, the first report may further include one or more of identification information of the terminal device in the source PSCell, the identification information of the terminal device in the target PSCell, a recording cause of the first report, and a measurement result. For descriptions of the recording cause, refer to the foregoing descriptions. Details are not described herein again. The measurement result may include one or more of a measurement result of the source PSCell, a measurement result of a neighboring cell of the source PSCell, and a measurement result of the target PSCell. In the condition PSCell change scenario, the first report may further include CPC configuration information; or the CPC configuration information and information indicating whether a trigger condition included in the CPC configuration information is met. The first report may further include cell information of the PCell. In an example, when a second condition is met, the first report may include the cell information of the PCell. The second condition may be that the terminal device is in an EN-DC mode, may be that the terminal device receives first indication information from the MN, or may be that the terminal device determines that a (condition) PSCell change procedure is not triggered by the S-SN. The first indication information may indicate the terminal device to record the cell information of the PCell in the first report, or may indicate that the (condition) PSCell change is triggered by the MN or the S-SN. The identification information of the terminal device in the source PSCell may be a C-RNTI allocated by the source PSCell to the terminal device, or may be an interface identifier of the terminal device in the S-SN. The interface identifier of the terminal device in the S-SN may be an identifier of an X2 interface when the terminal device is in the S-SN, or may be an identifier of an Xn interface when the terminal device is in the S-SN.

In a case, the terminal device may determine, depending on whether the terminal device is currently in an MR-DC mode, whether to record the cell information of the PCell in the first report. For example, when the terminal device is in the EN-DC mode, the terminal device may record the cell information of the PCell in the first report. For example, when the terminal device is in an NR-NR DC mode, an NE-DC mode, or an NG EN-DC mode, the terminal device may not record the cell information of the PCell in the first report.

In another case, when the terminal device determines that the (condition) PSCell change is not triggered by the S-SN (or is triggered by the MN), the terminal device may determine to record the cell information of the PCell in the first report. For example, when the terminal device determines that the (condition) PSCell change procedure is triggered by the S-SN, the terminal device may not record the cell information of the PCell in the first report; or when the terminal device determines that the (condition) PSCell change procedure is not triggered by the S-SN (or is triggered by the MN), the terminal device may record the cell information of the PCell in the first report. A mechanism for the terminal device to determine that the (condition) PSCell change procedure is triggered by the S-SN may be as follows: The terminal device receives a (condition) PSCell change configuration from the S-SN by using the signaling radio bearer (signaling radio bearer, SRB) 3, or the terminal device determines that a PSCell change configuration or a condition PSCell change trigger condition received by using an SRB 1 is configured by the S-SN. Further, two conditions in the second condition may work in combination, and are used by the terminal device to determine whether to record the cell information of the PCell. For example, when the terminal device is in the NR-NR DC mode, the NE-DC mode, or the NG EN-DC mode, and the PSCell change is triggered by the S-SN, the terminal device may not record the cell information of the PCell in the first report. For example, if the terminal device is in the EN-DC mode (or is not in the NR-NR DC mode, the NE-DC mode, or the NG EN-DC mode), the terminal device records the cell information of the PCell in the first report; or if the terminal device is not in the EN-DC mode (or the terminal device is in the NR-NR DC mode, the NE-DC mode, or the NG EN-DC mode), and the terminal device determines that the (condition) PSCell change is not triggered by the S-SN (or is triggered by the MN), the terminal device may record the cell information of the PCell in the first report.

In still another case, the terminal device may determine, based on an indication of the MN, whether to record the cell information of the PCell in the first report. In an implementation, when the MN needs the terminal device to record the cell information of the PCell, the MN may send, to the terminal device, the first indication information indicating to record the cell information of the PCell. Correspondingly, the terminal device may receive, from the MN, the first indication information indicating to record the cell information of the PCell, and may record the cell information of the PCell in the first report based on the first indication information. In another implementation, when the (condition) PSCell change is triggered by the MN, the MN may send, to the terminal device, the first indication information indicating that the PSCell change is triggered by the MN. Correspondingly, the terminal device may receive, from the MN, the first indication information indicating that the PSCell change is triggered by the MN, and may record the cell information of the PCell in the first report based on the first indication information. In still another implementation, in the (condition) PSCell change scenario, the MN may send, to the terminal device, the first indication information indicating whether current (condition) PSCell change is triggered by the MN or the S-SN. Correspondingly, the terminal device may receive the first indication information that is sent by the MN and that indicates whether the current (condition) PSCell change is triggered by the MN or the S-SN. For example, the first indication information may include one bit. When a value of the bit is 1, the first indication information indicates that the current (condition) PSCell change is triggered by the MN. When a value of the bit is 0, the first indication information indicates that the current (condition) PSCell change is triggered by the S-SN. If the terminal device determines that the (condition) PSCell change is triggered by the MN, the terminal device may record the cell information of the PCell in the first report. If the terminal device determines that the (condition) PSCell change is triggered by the S-SN, the terminal device may not record the cell information of the PCell in the first report.

The first report may further include second indication information indicating that the (condition) PSCell change is triggered by the MN or the S-SN. In the (condition) PSCell addition scenario, the first report does not include the second indication information. In the PSCell change scenario, the first report may include the second indication information. In still another possible implementation, in the (condition) PSCell change scenario, the first report may alternatively not include second indication information. In the (condition) PSCell change scenario, if the first report includes the cell information of the PCell, it may implicitly indicate that the (condition) PSCell change is triggered by the MN. Alternatively, if it is determined that the terminal device is not in the EN-DC mode and the first report includes the cell information of the PCell, it may implicitly indicate that the (condition) PSCell change is triggered by the MN.

The first report may further include the identification information of the terminal device in the PCell. When the first report includes the cell information of the PCell, the first report may include the identification information of the terminal device in the PCell. When the first report does not include the cell information of the PCell, the first report does not include the identification information of the terminal device in the PCell. The identification information of the terminal device in the PCell may be a C-RNTI allocated by the PCell to the terminal device, or may be an interface identifier of the terminal device in the MN. The interface identifier of the terminal device in the MN may be an identifier of an X2 interface when the terminal device is in the MN, or may be an identifier of an Xn interface when the terminal device is in the MN.

The first report may further include a potential failure cause. The potential failure cause indicates a potential cause of a failure of access to the target PSCell.

In an implementation, after recording the first report, the terminal device may send the first report to the first access network device based on a request of the first access network device. Specifically, the terminal device may send, to the first access network device, fourth indication information indicating that the first report is stored. Correspondingly, the first access network device receives the fourth indication information from the terminal device, and then may send, to the terminal device, a first request used to request the first report. Correspondingly, the terminal device receives the first request from the first access network device, and then may send the first report to the first access network device based on the first request. In this case, the first access network device is an access network device currently accessed by the terminal device.

502: The first access network device determines a second access network device based on the first report.

After receiving the first report, the first access network device may determine the second access network device based on the first report.

The first access network device may determine the second access network device based on one or more of the cell information of the PCell in the first report, the recording cause of the first report, and the second indication information.

In the (condition) PSCell addition scenario, the first access network device may determine the second access network device based on the cell information of the PCell in the first report and/or the recording cause of the first report. The first access network device may be the MN, the T-SN, or a third access network device. The third access network device is an access network device other than the MN and the T-SN.

In an implementation, the first report includes the cell information of the PCell, and the first access network device may determine, based on the cell information of the PCell, that the second access network device is the MN.

In an implementation, the first report includes the recording cause of the first report, and the first access network device may determine the second access network device based on the recording cause of the first report. The first access network device may determine the second access network device based on the first condition corresponding to the recording cause of the first report. For example, when the recording cause of the first report corresponds to that the quantity of random access attempts between the terminal device and the target PSCell is greater than or equal to the third threshold, the first access network device may determine that the second access network device is the T-SN. For example, when the recording cause of the first report corresponds to that the running time of the first timer is greater than or equal to the first threshold, or the ratio of the running time of the first timer to the configured duration of the first timer is greater than or equal to the second threshold, and the first timer is the T304 timer, the first access network device may determine that the second access network device is the T-SN. For example, when the recording cause of the first report corresponds to that the running time of the first timer is greater than or equal to the first threshold, or the ratio of the running time of the first timer to the configured duration of the first timer is greater than or equal to the second threshold, and the first timer is the T310 timer or the T312 timer, the third access network device may determine that the second access network device is the MN.

In the (condition) PSCell change scenario, the first access network device may determine the second access network device based on one or more of the cell information of the PCell in the first report, the recording cause of the first report, and the second indication information. The first access network device may be the MN, the S-SN, the T-SN, or a third access network device. The third access network device is an access network device other than the MN, the S-SN, and the T-SN.

In an implementation, when the first report includes the cell information of the PCell, the first access network device may determine, based on the cell information of the PCell, that the second access network device is the MN.

In an implementation, the first report includes the second indication information, and the first access network device may determine the second access network device based on the second indication information. When the second indication information indicates that the PSCell change is triggered by the MN, the first access network device may determine that the second access network device is the MN. When the second indication information indicates that the PSCell change is triggered by the S-SN, the first access network device may determine that the second access network device is the S-SN.

In an implementation, when the first report includes the recording cause of the first report, the first access network device may determine the second access network device based on the first condition corresponding to the recording cause of the first report. For example, when the recording cause of the first report corresponds to that the quantity of random access attempts between the terminal device and the target PSCell is greater than or equal to the third threshold, the first access network device may determine that the second access network device is the T-SN. For example, when the recording cause of the first report corresponds to that interruption time of data transmission between the terminal device and a secondary access network device is greater than or equal to the fourth threshold, the first access network device may determine that the second access network device is the S-SN or the MN. For example, when the recording cause of the first report corresponds to that the running time of the first timer is greater than or equal to the first threshold, or the ratio of the running time of the first timer to the configured duration of the first timer is greater than or equal to the second threshold, and the first timer is the T304 timer, the first access network device may determine that the second access network device is the T-SN. For example, when the recording cause of the first report corresponds to that the running time of the first timer is greater than or equal to the first threshold, or the ratio of the running time of the first timer to the configured duration of the first timer is greater than or equal to the second threshold, and the first timer is the T310 timer or the T312 timer, the first access network device may determine that the second access network device is the MN or the S-SN.

503: The first access network device determines whether the first access network device is the same as the second access network device. When the first access network device is the same as the second access network device, step 504 is performed. When the first access network device is different from the second access network device, step 505 is performed.

Specifically, when the first access network device is the same as the second access network device, in other words, the first access network device and the second access network device are a same access network device, it indicates that the first access network device does not forward the first report, and step 504 may be performed. When the first access network device is different from the second access network device, in other words, the first access network device and the second access network device are different access network devices, it indicates that the first access network device forwards the first report, and the first access network device may perform step 505.

504: The first access network device adjusts a mobility parameter based on the first report.

The first access network device adjusts the mobility parameter based on the first report. To be specific, the first access network device adjusts the mobility parameter of the first access network device based on the first report. The mobility parameter of the first access network device is a related parameter used by the first access network device to perform mobility management.

505: The first access network device sends the first report to the second access network device.

Correspondingly, the second access network device receives the first report from the first access network device.

When the first access network device is different from the second access network device, the first access network device may send the first report to the second access network device.

Optionally, the first access network device may further send fifth indication information to the second access network device. Correspondingly, the second access network device may receive the fifth indication information from the first access network device. The fifth indication information indicates a coding type of the first report. The coding type of the first report may be one or more of a coding type in NR, LTE, another standard or communication system, or the like.

When there is a communication interface between the first access network device and the second access network device, the first access network device may send the first report to the second access network device through the communication interface. Correspondingly, the second access network device may receive the first report from the first access network device. The communication interface between the first access network device and the second access network device may be an X2 interface, may be an Xn interface, or may be a communication interface between other access network devices. The first access network device may send the first report to the second access network device by using a radio link failure indication (radio link failure indication, RLF indication) message, a handover report (handover report) message, an access and mobility indication (access and mobility indication) message, or another message.

When there is no communication interface between the first access network device and the second access network device, the first access network device may send the first report to the second access network device via a core network device. Specifically, the first access network device may send the first report to the core network device through a communication interface between the access network device and the core network device. After receiving the first report from the first access network device, the core network device may send the first report to the second access network device. The second access network device may receive the first report from the core network device. The communication interface between the access network device and the core network device may be an S1 interface, may be an NG interface, or may be a communication interface between another access network device and the core network device. The first access network device may send the first report to the core network device by using an uplink radio access network (radio access network, RAN) configuration transfer (uplink RAN configuration transfer) message, a downlink RAN configuration transfer (downlink RAN configuration transfer) message, an eNB configuration transfer (eNB configuration transfer) message, an MME configuration transfer (MME configuration transfer) message, or another message.

When a quantity of second access network devices determined by the first access network device is greater than 1, the first access network device may send the first report to one second access network device. For example, when the first access network device is the third access network device, and the second access network devices are the MN and the T-SN, the first access network device may first send the first report to the MN, and then the MN sends the first report to the T-SN. Optionally, after receiving the first report from the first access network device, the MN may first determine the T-SN in a manner the same as a manner in which the first access network device determines the second access network device. Alternatively, the first access network device may first send the first report to the T-SN, and then the T-SN sends the first report to the MN. Optionally, after receiving the first report from the first access network device to the MN, the T-SN may first determine the MN in a manner the same as the manner in which the first access network device determines the second access network device.

When a quantity of second access network devices determined by the first access network device is greater than 1, the first access network device may alternatively send the first report to each second access network device or at least two second access network devices. For example, when the first access network device is the third access network device, and the second access network devices are the MN and the T-SN, the first access network device may separately send the first report to the T-SN and the MN. Optionally, the first access network device may further send, to the T-SN, indication information indicating that the first report has been sent to the MN, so that the T-SN does not forward the first report to the MN, and/or the third access network device may further send, to the MN, indication information indicating that the first report has been sent to the T-SN, so that the MN does not forward the first report to the T-SN.

It should be understood that the foregoing is described by using an example in which the first access network device sends the first report to the second access network device. In a possible implementation, the first access network device may send the first report to the second access network device in a container manner. In another possible implementation, the first access network device may alternatively send a part or all of information in the first report to the second access network device. For example, the first access network device generates corresponding information based on a part or all of the information in the first report, and sends the corresponding information to the second access network device. Optionally, in this implementation, the first access network device may further send the first report to the second access network device in a container manner.

After receiving the first report from the first access network device, the second access network device may further determine, based on the first report, whether to forward the first report. For detailed descriptions, refer to descriptions in embodiments of step 502 to step 504.

It should be understood that, when a CU and a DU are separated, if the first access network device determines, based on the first report, that the first access network device is the same as the second access network device, the CU of the first access network device may send the first report or a part of the information in the first report to the DU. For example, the first access network device determines that the triggering cause recorded in the first report is associated with the T304 timer or the random access, and the CU may send, to the DU, the first report or information that is in the first report and that is associated with the random access.

It should be understood that, when the CU and the DU are separated, a CU-UP and a CU-CP are separated, and one or more CU-CPs are included, an access network device may be divided into a first network element having various radio resource management functions, for example, a CU-CP 1, and a second network element having an execution or implementation function, for example, a CU-CP 2. The first network element may also be referred to as an artificial intelligence (artificial intelligence, AI) controller or a near real-time radio access network intelligent controller. For example, the first network element may be configured to determine the second access network device and/or stored context information of the terminal device based on the first report. The context information of the terminal device may include one or more of identification information of the terminal device in the MN, identification information of the terminal device in a source secondary PCell, identification information of the terminal device in a target secondary PSCell, S-SN mobility information, and the CPAC configuration information. The second network element is configured to receive information from another access network device or the terminal device and send information to another access network device or the terminal device, or is configured to execute a command of the first network element. For example, the second network element receives the first report. The second network element forwards the first report or a part or all of the information in the first report to the first network element. The first network element may determine the second access network device based on the first report. When the first access network device is the same as the second access network device, the first network element may determine a mobility parameter optimization mechanism based on the first report, and send an updated mobility parameter or optimization mechanism to the second network element. The second network element may adjust the mobility parameter based on the foregoing information. When the first access network device is different from the second access network device, the first network element sends information about the second access network device to the second network element, so that the second network element sends the first report to the second access network device. Optionally, the first network element may further send one or more of the identification information of the terminal device in the source PSCell, the S-SN mobility information, and the CPAC configuration information to the second network element.

In the foregoing communication method, after receiving the first report, the first access network device may determine the second access network device based on the first report. When the first access network device is the same as the second access network device, the mobility parameter of the first access network device may be adjusted based on the first report. When the first access network device is different from the second access network device, the first report may be forwarded to the second access network device. It can be learned that the first access network device may properly process the first report, so that robustness of mobility parameter adjustment on a network side based on the first report can be improved.

Based on the network architectures shown in FIG. 2 to FIG. 4, FIG. 6 is a schematic flowchart of another communication method according to an embodiment of this application. As shown in FIG. 6, the communication method may include the following steps. The communication method may be implemented in combination with the embodiment in FIG. 5, or may be implemented separately.

601: When a terminal device accesses a target PSCell and a first condition is met, the terminal device records a first report.

For specific descriptions of the first condition, refer to related content in the embodiment shown in FIG. 5.

For example, the terminal device may receive first configuration information from one or more of an MN, an S-SN, and a T-SN, and determine, based on the first configuration information, that the first condition is met.

For detailed descriptions of content and a recording mechanism of the first report, refer to related descriptions in step 501. This is not limited herein.

In an implementation, the communication method may further include the following step. 602: The terminal device sends the first report.

After recording the first report, the terminal device may send the first report to one or more of the MN, the S-SN, the T-SN, and a third access network device. For example, the terminal device may send the first report to one or more of the MN, the S-SN, the T-SN, and the third access network device by using an SRB 1 or another SRB. For another example, the terminal device may send the first report to the T-SN by using an SRB 3. In a (condition) PSCell addition scenario, the terminal device may send the first report to one or more of the MN, the T-SN, and the third access network device. In a (condition) PSCell change scenario, the terminal device may send the first report to one or more of the MN, the S-SN, the T-SN, and the third access network device. For an operation performed after the MN, the S-SN, the T-SN, or the third access network device receives the first report from the terminal device, refer to descriptions in step 502 to step 505.

In the foregoing communication method, when the terminal device accesses the target PSCell and the first condition is met, the terminal device may record the first report including information related to a process of accessing the target PSCell, so that subsequent invocation can be performed.

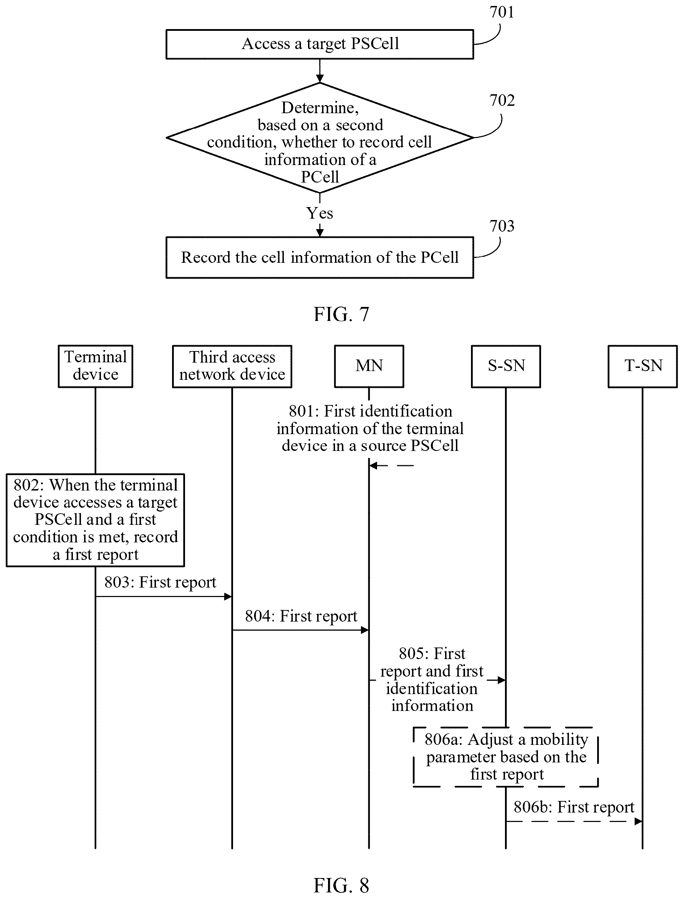

Based on the network architectures shown in FIG. 2 to FIG. 4, FIG. 7 is a schematic flowchart of still another communication method according to an embodiment of this application. As shown in FIG. 7, the communication method may include the following steps. The communication method may be implemented in combination with the embodiment in FIG. 5 or FIG. 6, or may be implemented separately.

701: When a terminal device accesses a target PSCell and it is determined that a first condition is met, the terminal device records a first report.

The first report may include information related to a process of accessing the target PSCell. For detailed descriptions of step 701, refer to related descriptions in step 501.

702: The terminal device determines, based on a second condition, whether to record cell information of a PCell, and performs step 703 when determining to record the cell information of the PCell.

Optionally, the terminal device may determine whether the second condition is met. When the second condition is met, it indicates that the terminal device determines, based on the second condition, to record the cell information of the PCell, and may record the cell information of the PCell. When the second condition is not met, it indicates that the terminal device determines, based on the second condition, not to record the cell information of the PCell, and may not record the cell information of the PCell.

For a mechanism for the terminal device to determine, based on the second condition, whether to record the cell information of the PCell, refer to the related descriptions in step 501. Details are not described herein again.

703: The terminal device records the cell information of the PCell.

Optionally, the cell information of the PCell is recorded in the first report.

When the embodiment shown in FIG. 7 is combined with the communication method provided in the embodiment shown in FIG. 5 or FIG. 6, the embodiment shown in FIG. 7 may be used as a specific implementation of step 501 or step 601. For example, if the terminal device records the cell information of the PCell in the first report, step 601 may include step 702 and step 703.

In the foregoing communication method, after accessing the target PSCell, the terminal device may determine, based on the second condition, whether to record the cell information of the PCell, so that when determining to record the cell information of the PCell, the terminal device may record the cell information of the PCell, to facilitate subsequent forwarding of the first report.

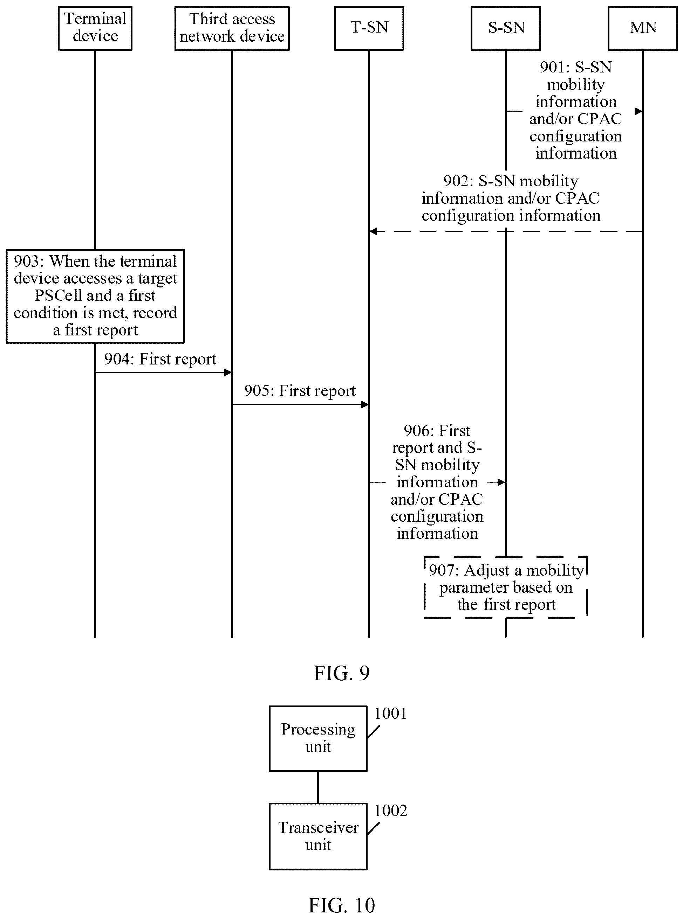

Based on the network architectures shown in FIG. 2 to FIG. 4, refer to communication methods shown in FIG. 8 and FIG. 9. Embodiments shown in FIG. 8 and FIG. 9 describe the technical solutions provided in this application based on embodiments shown in FIG. 5 to FIG. 7. Content that has been described in the foregoing embodiments is not described again. As shown in FIG. 8, the communication method may include the following steps.

801: An MN receives first identification information of a terminal device in a source PSCell.

In a possible implementation, the MN receives the first identification information of the terminal device in the source PSCell from an S-SN.

In a (condition) PSCell change scenario, after the terminal device accesses the S-SN, the S-SN may send the first identification information of the terminal device in the source PSCell to the MN. The first identification information may be a C-RNTI of the terminal device in the source PSCell, or may be interface identification information of the terminal device in the S-SN.

The S-SN may send the first identification information of the terminal device in the source PSCell to the MN by using a first message. In a case, the first message may include the first identification information of the terminal device in the source PSCell. In another case, the first message may include the first identification information of the terminal device in the source PSCell and second identification information of the terminal device in the source PSCell. In this case, the second identification information is in a container, and the first identification information is outside the container. For example, the first identification information and the second identification information are same information, for example, both are C-RNTIs of the terminal device in the source PSCell. For example, the first identification information and the second identification information are different information. For example, the first identification information is an interface identifier of the terminal device in the S-SN, and the second identification information is a C-RNTI of the terminal device in the source PSCell. The first message may be one or more of messages such as an SN change required (SN change required) message, an SN modification request acknowledge (SN modification request acknowledge) message, an SN status transfer (SN status transfer) message, and a secondary RAT data usage report (secondary RAT data usage report) message.

After receiving the first message, the MN may store the first identification information. When the first message includes the first identification information of the terminal device in the source PSCell and the second identification information of the terminal device in the source PSCell, the MN may further send the second identification information of the terminal device in the source PSCell to a T-SN by using the container. Correspondingly, the T-SN may receive the second identification information from the MN and store the second identification information. It should be understood that information in the container is transparently transmitted, in other words, the MN does not parse the information.

Optionally, the S-SN may further send S-SN mobility information and/or CPAC configuration information to the MN. Correspondingly, the MN receives the S-SN mobility information and/or the CPAC configuration information from the S-SN and stores the S-SN mobility information and/or the CPAC configuration information. The S-SN mobility information and/or the CPAC configuration information may be sent by using the first message, or may be sent by using another message or other signaling. The CPAC configuration information may be CPC configuration information.

Step 801 may be performed or may not be performed.

802: When the terminal device accesses a target PSCell and a first condition is met, the terminal device records a first report.

For detailed descriptions of step 802, refer to step 601 and step 602.

803: The terminal device sends the first report to a third access network device.

For detailed descriptions of step 803, refer to related descriptions of sending the first report by the terminal device to the first access network device in step 501.

804: The third access network device sends the first report to the MN.

After receiving the first report, the third access network device may determine the MN based on the first report, and then may send the first report to the MN. For detailed descriptions of determining the MN by the third access network device based on the first report, refer to step 502.

805: The MN sends the first report to the S-SN.

Correspondingly, the S-SN receives the first report from the MN.

After receiving the first report, the MN may determine the S-SN based on the first report, and then may send the first report to the S-SN. For detailed descriptions of determining the S-SN by the MN based on the first report, refer to step 502.

For various implementations of sending the first report to the MN in step 804 and sending the first report to the S-SN in step 805, refer to descriptions in step 505.

The MN may further send the first identification information of the terminal device in the source PSCell to the S-SN. For example, when step 801 is performed, the MN stores the first identification information of the terminal device in the source PSCell, and the MN may further send the first identification information of the terminal device in the source PSCell to the S-SN.

In another possible implementation, when step 801 is not performed, this embodiment further includes: The MN receives the first identification information that is of the terminal device in the source PSCell and that is sent by a T-SN. Correspondingly, the MN may receive the first identification information of the terminal device in the source PSCell from the T-SN. Optionally, in this implementation, the method may further include: The MN sends a first request to the T-SN. The first request is used to request the first identification information of the terminal device in the source PSCell. The first request may include an interface identifier of the terminal device in the T-SN, and/or an interface identifier of the terminal device in the MN. It may be understood that, if the first identification information of the terminal device in the source PSCell is a C-RTNI of the terminal device in the source PSCell, the T-SN may determine the first identification information based on second identification information of the terminal device in the source PSCell.

Correspondingly, an S-SN may receive the first identification information of the terminal device in the source PSCell from the MN. The MN may further send S-SN mobility information and/or CPAC configuration information to the S-SN. Correspondingly, the S-SN may receive the S-SN mobility information and/or the CPAC configuration information from the MN. A first report, the first identification information, and the S-SN mobility information and/or the CPAC configuration information may be transmitted by using one message or one piece of signaling, or may be separately transmitted by using a plurality of messages or a plurality of pieces of signaling.

The communication method may further include the following step. 806a: The S-SN adjusts a mobility parameter based on the first report. Alternatively, 806b: The S-SN sends the first report to the T-SN.

After receiving the first report, the S-SN may determine the S-SN or the T-SN based on the first report. For detailed descriptions of determining the S-SN or the T-SN by the S-SN based on the first report, refer to step 502. When the S-SN is determined, the S-SN may adjust the mobility parameter based on the first report. When the T-SN is determined, the S-SN may send the first report to the T-SN.

In the communication method, the first access network device may be the third access network device, and a second access network device determined by the third access network device is the MN. Alternatively, the first access network device may be the MN, and a second access network device determined by the MN is the S-SN. Alternatively, the first access network device may be the S-SN, and a second access network device determined by the S-SN is the T-SN.

As shown in FIG. 9, the communication method may include the following steps.

901: An S-SN sends S-SN mobility information and/or CPAC configuration information to an MN.

Correspondingly, the MN receives the S-SN mobility information and/or the CPAC configuration information from the S-SN.

In a (condition) PSCell change scenario, the S-SN may send the S-SN mobility information and/or the CPAC configuration information to the MN. The MN receives and stores the S-SN mobility information and/or the CPAC configuration information.

Alternatively, the S-SN may send a first container to the MN. Correspondingly, the MN receives the first container from the S-SN. The first container may include the S-SN mobility information and/or the CPAC configuration information. The first container and the S-SN mobility information and/or the CPAC configuration information in step 801 may be sent by using a same message or same signaling, or may be sent by using different messages or signaling. The message may be one or more of messages such as an SN change required message, an SN modification request acknowledge message, an SN status transfer message, and a secondary RAT data usage report message.

902: The MN sends the S-SN mobility information and/or the CPAC configuration information to a T-SN.

Correspondingly, the T-SN receives the S-SN mobility information and/or the CPAC configuration information from the MN.

That the MN sends the S-SN mobility information and/or the CPAC configuration information to the T-SN may be that the MN forwards the S-SN mobility information and/or the CPAC configuration information in step 901 to the T-SN, or may be that the MN forwards the first container to the T-SN.

After receiving the S-SN mobility information and/or the CPAC configuration information, the T-SN may store the S-SN mobility information and/or the CPAC configuration information. The first container may further include identification information of a terminal device in a source PSCell. Correspondingly, the T-SN may further store the identification information of the terminal device in the source PSCell.

Step 901 and/or step 902 may be performed, or may not be performed.

903: When the terminal device accesses a target PSCell and a first condition is met, the terminal device records a first report.

For detailed descriptions of step 903, refer to step 601 and step 602.

904: The terminal device sends the first report to a third access network device.

For detailed descriptions of step 904, refer to related descriptions of sending the first report by the terminal device to the first access network device in step 501.

905: The third access network device sends the first report to the T-SN.

After receiving the first report, the third access network device may determine the T-SN based on the first report, and then may send the first report to the T-SN. For detailed descriptions of determining the T-SN by the third access network device based on the first report, refer to step 502.

906: The T-SN sends the first report to the S-SN.

Correspondingly, the S-SN receives the first report from the T-SN.

After receiving the first report, when determining the S-SN based on the first report, the T-SN may send the first report to the S-SN. For detailed descriptions of determining the S-SN by the T-SN based on the first report, refer to step 502.

For various implementations of sending the first report to the T-SN in step 905 and sending the first report to the S-SN in step 906, refer to descriptions in step 505.

The T-SN may further send the S-SN mobility information and/or the CPAC configuration information to the S-SN. Correspondingly, the S-SN may receive the S-SN mobility information and/or the CPAC configuration information from the T-SN. For example, when step 902 is performed, the T-SN stores the S-SN mobility information and/or the CPAC configuration information, and the T-SN sends the S-SN mobility information and/or the CPAC configuration information to the S-SN.

In another possible implementation, when step 902 is not performed in this embodiment, this embodiment may further include: A T-SN receives the S-SN mobility information and/or the CPAC configuration information sent by the MN. Optionally, in this implementation, the method may further include: The T-SN sends a second request to the MN. The second request is used to request the S-SN mobility information and/or the CPAC configuration information. The second request may carry an interface identifier of a terminal device in the T-SN and/or an interface identifier of the terminal device in the MN.

The T-SN may further send identification information of the terminal device in a source PSCell to the S-SN. Correspondingly, the S-SN may receive the identification information of the terminal device in the source PSCell from the T-SN. A first report, the identification information of the terminal device in the source PSCell, and the S-SN mobility information and/or the CPAC configuration information may be transmitted by using one message or one piece of signaling, or may be separately transmitted by using a plurality of messages or a plurality of pieces of signaling.

For example, the communication method may further include the following step. 907: The S-SN adjusts a mobility parameter based on the first report.

It should be understood that the communication methods corresponding to FIG. 8 and FIG. 9 are two implementations in which the access network device accessed by the terminal device is the third access network device in the communication methods corresponding to FIG. 5 to FIG. 7, and implementations of the communication methods corresponding to FIG. 5 to FIG. 7 are not limited. For example, the access network device accessed by the terminal device may be the MN, the S-SN, or the T-SN. In this case, there is no third access network device.

In the communication method, the first access network device may be the third access network device, and a second access network device determined by the third access network device is the T-SN. Alternatively, the first access network device may be the T-SN, and a second access network device determined by the T-SN is the S-SN.

In the communication methods corresponding to FIG. 8 and FIG. 9, when sending the first report to the S-SN, the MN or the T-SN also sends the identification information of the terminal device in the source PSCell, and the S-SN mobility information and/or the CPAC configuration information to the S-SN, so that a source secondary access network device can identify the terminal device, and determine the S-SN mobility information and/or the CPAC configuration information when the first report is generated, to adjust the mobility parameter of the first access network device based on the first report.

It should be understood that functions performed by the access network device in the foregoing communication method may alternatively be performed by a module (for example, a chip) in the access network device, or may be performed by a logical module or software that can implement all or some functions of the access network device. Functions performed by the terminal device may alternatively be performed by a module (for example, a chip) in the terminal device, or may be performed by a logical module or software that can implement all or some functions of the terminal device.

Based on the foregoing network architecture, FIG. 10 is a diagram of a structure of a communication apparatus according to an embodiment of this application. As shown in FIG. 10, the communication apparatus may include a processing unit 1001 and a transceiver unit 1002. For detailed descriptions of the processing unit 1001 and the transceiver unit 1002, refer to the descriptions in the third aspect and the fourth aspect of the summary. For more detailed descriptions of the processing unit 1001 and the transceiver unit 1002, refer directly to related descriptions in the method embodiments shown in FIG. 5 to FIG. 8. Details are not described herein again.

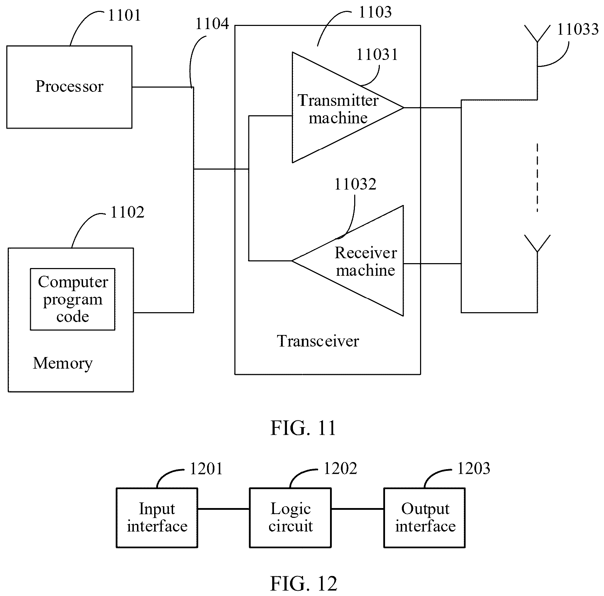

Based on the foregoing network architecture, FIG. 11 is a diagram of a structure of another communication apparatus according to an embodiment of this application. As shown in FIG. 11, the communication apparatus may include a processor 1101, a memory 1102, a transceiver 1103, and a bus 1104. The memory 1102 may exist independently, and may be connected to the processor 1101 through the bus 1104. The memory 1102 may alternatively be integrated with the processor 1101. The bus 1104 is configured to implement connections between the components. In a case, as shown in FIG. 10, the transceiver 1103 may include a transmitter machine 11031, a receiver machine 11032, and an antenna 11033. In another case, the transceiver 1103 may include a transmitter (namely, an output interface) and a receiver (namely, an input interface). The transmitter may include a transmitter machine and an antenna, and the receiver may include a receiver machine and an antenna.

When computer program instructions stored in the memory 1102 are executed, the processor 1101 is configured to perform an operation performed by the processing unit 1001 in the foregoing embodiments, and the transceiver 1103 is configured to perform an operation performed by the transceiver unit 1002 in the foregoing embodiments. The communication apparatus may be further configured to perform various methods performed in the method embodiments in FIG. 5 to FIG. 9. Details are not described again.

Based on the foregoing network architecture, FIG. 12 is a diagram of a structure of still another communication apparatus according to an embodiment of this application. As shown in FIG. 12, the communication apparatus may include an input interface 1201, a logic circuit 1202, and an output interface 1203. The input interface 1201 is connected to the output interface 1203 through the logic circuit 1202. The input interface 1201 is configured to receive information from another communication apparatus, and the output interface 1203 is configured to output, schedule, or send information to another communication apparatus. The logic circuit 1202 is configured to perform an operation other than operations of the input interface 1201 and the output interface 1203, for example, implement a function implemented by the processor 1101 in the foregoing embodiment. The communication apparatus may be a terminal device, or may be an access network device. For more detailed descriptions of the input interface 1201, the logic circuit 1202, and the output interface 1203, refer directly to related descriptions of the terminal device and the access network device in the foregoing method embodiments. Details are not described herein again.

An embodiment of this application further discloses a computer-readable storage medium. The computer-readable storage medium stores instructions, and when the instructions are executed by a processor, the methods in the foregoing method embodiments are performed.

An embodiment of this application further discloses a computer program product including instructions. When the instructions are executed by a processor, the methods in the foregoing method embodiments are performed.

An embodiment of this application further discloses a communication system. The communication system may include an access network device. For specific descriptions, refer to the communication methods shown in FIG. 5 to FIG. 9. In an implementation, the communication system further includes a terminal device.

The protocol in this application may be a communication protocol or a specification, for example, a 3GPP communication protocol.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this application may represent "and/or". For example, A/B represents A and/or B.

It should be understood that, in embodiments of the present invention, "B corresponding to A" indicates that B is associated with A, and B may be determined based on A. However, it should be further understood that determining B based on A does not mean that B is determined based only on A. B may alternatively be determined based on A and/or other information.

"A plurality of" in embodiments of this application means two or more.

Descriptions such as "first" and "second" in embodiments of this application are merely used for illustration and distinguishing between described objects, are not sequenced, do not represent a special limitation on a quantity of described objects in embodiments of this application, and do not constitute any limitation on embodiments of this application.

Mutual reference may be made to content in embodiments of this application. Unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that in embodiments of this application, the terminal device and/or the access network device may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be necessarily to be performed.

## Claims

1. A communication method, wherein the method is applied to a first access network device and comprises:
receiving a first report, wherein the first report is recorded by a terminal device when the terminal device accesses a target primary secondary cell PSCell and a first condition is met, and the first report comprises information related to a process of accessing the target PSCell;
determining a second access network device based on the first report; and
adjusting a mobility parameter based on the first report when the first access network device is the same as the second access network device; or
sending the first report to the second access network device when the first access network device is different from the second access network device.

2. The method according to claim 1, wherein the sending the first report to the second access network device comprises:
when the first access network device is a master access network device and the second access network device is a source secondary access network device, sending the first report to the source secondary access network device; and
the method further comprises:
sending first identification information of the terminal device in a source PSCell to the source secondary access network device.

3. The method according to claim 2, wherein the method further comprises:
sending source secondary access network device mobility information and/or condition PSCell addition and change CPAC configuration information to the source secondary access network device.

4. The method according to claim 2 or 3, wherein the method further comprises:
receiving a first message from the source secondary access network device, wherein the first message comprises the first identification information and second identification information of the terminal device in the source PSCell, the second identification information is in a container, and the first identification information is outside the container.

5. The method according to claim 2 or 3, wherein the method further comprises:
receiving the first identification information from a target secondary access network device.

6. The method according to claim 5, wherein the method further comprises:
sending a first request to the target secondary access network device, wherein the first request is used to request the first identification information.

7. The method according to any one of claims 3 to 6, wherein the method further comprises:
receiving the source secondary access network device mobility information and/or the CPAC configuration information from the source secondary access network device.

8. The method according to claim 1, wherein the sending the first report to the second access network device comprises:
when the first access network device is a target secondary access network device and the second access network device is a source secondary access network device, sending the first report to the source secondary access network device; and
the method further comprises:
sending source secondary access network device mobility information and/or CPAC configuration information to the source secondary access network device.

9. The method according to claim 8, wherein the method further comprises:
sending identification information of the terminal device in a source PSCell to the source secondary access network device.

10. The method according to claim 8 or 9, wherein the method further comprises:
receiving the source secondary access network device mobility information and/or the CPAC configuration information from a master access network device.

11. The method according to claim 10, wherein the method further comprises:
sending a second request to the master access network device, wherein the second request is used to request the source secondary access network device mobility information and/or the CPAC configuration information.

12. The method according to any one of claims 1 to 11, wherein the first report comprises cell information of a primary cell PCell.

13. The method according to claim 12, wherein when a second condition is met, the first report comprises the cell information of the PCell, and the second condition is any one of the following:
the terminal device is in an evolved universal terrestrial radio access-new radio dual connectivity EN-DC mode; and
first indication information is received from the master access network device, wherein the first indication information indicates to record the cell information of the PCell, or indicates that PSCell change is triggered by the master access network device.

14. The method according to any one of claims 1 to 13, wherein the first report comprises cell information of the target PSCell.

15. The method according to claim 14, wherein the first report further comprises one or more of identification information of the terminal device in the target PSCell, a recording cause of the first report, and a measurement result, the recording cause corresponds to the first condition, and the measurement result comprises a measurement result of the target PSCell.

16. The method according to any one of claims 1 to 13, wherein the first report comprises cell information of the source PSCell and cell information of the target PSCell.

17. The method according to claim 16, wherein the first report further comprises one or more of the identification information of the terminal device in the source PSCell, identification information of the terminal device in the target PSCell, a recording cause of the first report, and a measurement result, the recording cause corresponds to the first condition, and the measurement result comprises one or more of a measurement result of the source PSCell, a measurement result of a neighboring cell of the source PSCell, and a measurement result of the target PSCell.

18. The method according to any one of claims 1 to 17, wherein the first report comprises second indication information, and the second indication information indicates that the PSCell change is triggered by the master access network device or the source secondary access network device.

19. The method according to any one of claims 1 to 18, wherein the first report comprises identification information of the terminal device in the PCell.

20. The method according to claim 18, wherein the determining a second access network device based on the first report comprises:
determining the second access network device based on one or more of the cell information of the PCell, the recording cause of the first report, and the second indication information.

21. The method according to any one of claims 1 to 20, wherein the first condition comprises one or more of the following:
running time of a first timer is greater than or equal to a first threshold;
a ratio of the running time of the first timer to configured duration of the first timer is greater than or equal to a second threshold;
a quantity of random access attempts between the terminal device and the target PSCell is greater than or equal to a third threshold; and
interruption time of data transmission between the terminal device and a secondary access network device is greater than or equal to a fourth threshold, wherein
the first timer is any timer for determining whether a connection failure exists between the terminal device and the secondary access network device.

22. The method according to claim 21, wherein the method further comprises:
sending first configuration information to the terminal device, wherein the first configuration information is used to configure one or more of the first threshold, the second threshold, the third threshold, and the fourth threshold.

23. The method according to claim 22, wherein the method further comprises:
receiving third indication information from the terminal device, wherein the third indication information indicates that the terminal device has a capability of recording the first report.

24. The method according to any one of claims 1 to 23, wherein the receiving a first report comprises:
receiving the first report from the terminal device, the master access network device, the source secondary access network device, the target secondary access network device, or a core network device.

25. A communication method, wherein the method is applied to a terminal device and comprises:
recording a first report when the terminal device accesses a target primary secondary cell PSCell and a first condition is met, wherein the first report comprises information related to a process of accessing the target PSCell.

26. The method according to claim 25, wherein the first report comprises cell information of a primary cell PCell.

27. The method according to claim 26, wherein when a second condition is met, the first report comprises the cell information of the PCell, and the second condition is any one of the following:
the terminal device is in an evolved universal terrestrial radio access-new radio dual connectivity EN-DC mode; and
first indication information is received from a master access network device, wherein the first indication information indicates to record the cell information of the PCell, or indicates that PSCell change is triggered by the master access network device.

28. The method according to any one of claims 25 to 27, wherein the first report comprises cell information of the target PSCell.

29. The method according to claim 28, wherein the first report further comprises one or more of identification information of the terminal device in the target PSCell, a recording cause of the first report, and a measurement result, the recording cause corresponds to the first condition, and the measurement result comprises a measurement result of the target PSCell.

30. The method according to any one of claims 25 to 27, wherein the first report comprises cell information of a source PSCell and cell information of the target PSCell.

31. The method according to claim 30, wherein the first report further comprises one or more of identification information of the terminal device in the source PSCell, identification information of the terminal device in the target PSCell, a recording cause of the first report, and a measurement result, the recording cause corresponds to the first condition, and the measurement result comprises one or more of a measurement result of the source PSCell, a measurement result of a neighboring cell of the source PSCell, and a measurement result of the target PSCell.

32. The method according to any one of claims 25 to 31, wherein the first report comprises second indication information, and the second indication information indicates that the PSCell change is triggered by the master access network device or a source secondary access network device.

33. The method according to any one of claims 25 to 32, wherein the first report comprises identification information of the terminal device in the PCell.

34. The method according to any one of claims 25 to 33, wherein the first condition comprises one or more of the following:
running time of a first timer is greater than or equal to a first threshold;
a ratio of the running time of the first timer to configured duration of the first timer is greater than or equal to a second threshold;
a quantity of random access attempts between the terminal device and the target PSCell is greater than or equal to a third threshold; and
interruption time of data transmission between the terminal device and a secondary access network device is greater than or equal to a fourth threshold, wherein
the first timer is any timer for determining whether a connection failure exists between the terminal device and the secondary access network device.

35. The method according to claim 34, wherein the method further comprises:
receiving first configuration information from one or more of the master access network device, the source secondary access network device, and a target secondary access network device, wherein the first configuration information is used to configure one or more of the first threshold, the second threshold, the third threshold, and the fourth threshold; and
determining, based on the first configuration information, that the first condition is met.

36. The method according to claim 35, wherein the method further comprises:
sending third indication information to one or more of the master access network device, the source secondary access network device, and the target secondary access network device, wherein the third indication information indicates that the terminal device has a capability of recording the first report.

37. The method according to any one of claims 25 to 36, wherein the method further comprises:
sending the first report to one or more of the master access network device, the source secondary access network device, and the target secondary access network device.

38. A communication apparatus, comprising a unit configured to perform the method according to any one of claims 1 to 24, or a unit configured to perform the method according to any one of claims 25 to 37.

39. A communication apparatus, comprising a processor, a memory, and a transceiver, wherein the transceiver is configured to: receive information from a communication apparatus other than the communication apparatus, and output information to a communication apparatus other than the communication apparatus, and the processor invokes a computer program stored in the memory to implement the method according to any one of claims 1 to 37.

40. A computer-readable storage medium, wherein the computer-readable storage medium stores a computer program or computer instructions, and when the computer program or the computer instructions are run by a processor, the method according to any one of claims 1 to 37 is implemented.

41. A computer program product, wherein the computer program product comprises computer program code, and when the computer program code is run by a processor, the method according to any one of claims 1 to 37 is implemented.
